# EUROPEAN PATENT APPLICATION

(11) **EP 4 611 413 A1**
(43) Date of publication of application: **03.09.2025**
(21) Application number: 22963017.3
(22) Date of filing: 25.10.2022
(51) Int. Cl.: H04W 16/10, H04L 27/00

(54) **WIRELESS COMMUNICATION METHOD, ACCESS POINT DEVICE, AND STATION DEVICE**

(71) Applicant: GUANGDONG OPPO MOBILE TELECOMMUNICATIONS CORP., LTD., Dongguan, Guangdong 523860 (CN)
(72) Inventor: ZHU, De, Dongguan, Guangdong 523860 (CN); LU, Liuming, Dongguan, Guangdong 523860 (CN); HOU, Ronghui, Dongguan, Guangdong 523860 (CN); LUO, Chaoming, Dongguan, Guangdong 523860 (CN)
(74) Representative: RGTH
(86) International application number: PCT/CN2022/127457
(87) International publication number: WO 2024/087030

(57) **Abstract**

Disclosed are a wireless communication method, an access point device and a station device, and the method includes: receiving, by a first access point device, first information transmitted by a first station device, where the first information is used for indicating information of at least one first basic service set (BSS), transmission within the at least one first BSS is capable of interfering with transmission during a restricted target wake time (R-TWT) service period (SP) established between the first station device and the first access point device, and the at least one first BSS is an overlapping basic service set (OBSS) of a BSS to which the first access point device and the first station device belong; and establishing, by the first access point device, an R-TWT between the first access point device and the first station device according to the first information.

## Description

### TECHNICAL FIELD

Embodiments of the present disclosure relate to the field of communications, and in particular, to a wireless communication method, an access point device and a station device.

### BACKGROUND

In 802.11ax, a timed wake-up power save mode, i.e., target wake time (TWT), is proposed. In order to reduce contention between stations (STAs) and an amount of time that a STA using the power save mode needs to wake up, a mechanism that the STA wakes up only during a predefined service period (SP) to perform frame interaction with an access point (AP), and continues to sleep after the end of the SP is proposed in the TWT.

In order to meet data transmission requirements of application scenarios such as low-latency and high-definition video streaming, a restricted target wake time (R-TWT) is introduced, which is able to use enhanced medium access protection and resource reservation mechanisms for delivery of latency sensitive traffic. However, if there is interference in data transmission within an R-TWT SP, latency sensitive traffic may not be delivered on time. Therefore, how to establish an R-TWT to reduce interference within the R-TWT SP is an urgent problem to be solved.

### SUMMARY

The present disclosure provides a wireless communication method, an access point device and a station device, which is beneficial for reducing interference within an established R-TWT.

In a first aspect, a wireless communication method is provided, and the method includes: receiving, by a first access point device, first information transmitted by a first station device, where the first information is used for indicating information of at least one first basic service set (BSS), transmission within the at least one first BSS is capable of interfering with transmission during a restricted target wake time (R-TWT) service period (SP) established between the first station device and the first access point device, and the at least one first BSS is an overlapping basic service set (OBSS) of a BSS to which the first access point device and the first station device belong; and establishing, by the first access point device, an R-TWT between the first access point device and the first station device according to the first information.

In a second aspect, a wireless communication method is provided, and the method includes: transmitting, by a first station device, first information to a first access point device, where the first information is used for indicating information of at least one first BSS, transmission within the at least one first BSS is capable of interfering with transmission during an R-TWT SP established between the first station device and the first access point device, and the at least one first BSS is an OBSS of a BSS to which the first access point device and the first station device belong.

In a third aspect, an access point device is provided, configured to perform the method in the above first aspect or each implementation thereof.

Specifically, the access point device includes functional modules to perform the method in the above first aspect or each implementation thereof.

In a fourth aspect, a station device is provided, configured to perform the method in the above second aspect or each implementation thereof.

Specifically, the station device includes a functional module to perform the method in the above second aspect or each implementation thereof.

In a fifth aspect, an access point device is provided, and the access point device includes a processor and a memory. The memory is configured to store a computer program, and the processor is configured to call the computer program stored in the memory and run the computer program, to perform the method in the first aspect or each implementation thereof.

In a sixth aspect, a station device is provided, and the station device includes a processor and a memory. The memory is configured to store a computer program, and the processor is configured to call the computer program stored in the memory and run the computer program, to perform the method in the above second aspect or each implementation thereof.

In a seventh aspect, a chip is provided, configured to implement the method according to any one of the above first to second aspects or each implementation thereof.

Specifically, the chip includes a processor, and the processor is configured to call a computer program from a memory and run the computer program, to enable a device equipped with the chip to perform the method according to any one of the above first to second aspects or each implementation thereof.

In an eighth aspect, a computer-readable storage medium is provided, configured to store a computer program. The computer program enables a computer to perform the method according to any one of the above first to second aspects or each implementation thereof.

In a ninth aspect, a computer program product is provided, which includes computer program instructions. The computer program instructions enable a computer to perform the method according to any one of the above first to second aspects or each implementation thereof.

In a tenth aspect, a computer program is provided, and the computer program, when executed on a computer, enables the computer to perform the method according to any one of the above first to second aspects or each implementation thereof.

Through the above technical solutions, the station device may report the interference BSS information (i.e., OBSS information) of the station device to the access point device; and furthermore, the access point device may establish the R-TWT between the station device and the access point device according to the established R-TWT within the interference BSS. In this way, it is beneficial for reducing the interference of the established R-TWT within the interference BSS to the transmission within the R-TWT between the station device and the access point device.

### BRIEF DESCRIPTION OF THE DRAWINGS

FIG. 1 is a schematic diagram of a communication system architecture provided in the embodiments of the present disclosure.
FIG. 2 is a format schematic diagram of a TWT element provided in the embodiments of the present disclosure.
FIG. 3 is a format schematic diagram of a Control field in the TWT element provided in the embodiments of the present disclosure.
FIG. 4 is a format schematic diagram of a Broadcast TWT Parameter set field provided in the embodiments of the present disclosure.
FIG. 5 is a format schematic diagram of a Request Type field provided in the embodiments of the present disclosure.
FIG. 6 is a format schematic diagram of a Broadcast TWT Info field provided in the embodiments of the present disclosure.
FIG. 7 is a schematic diagram of a procedure of establishing and using an R-TWT provided in the embodiments of the present disclosure.
FIG. 8 is a schematic diagram of an application scenario of the embodiments of the present disclosure.
FIG. 9 is a schematic flowchart of a wireless communication method provided in the embodiments of the present disclosure.
FIG. 10 is a format schematic diagram of an OBSS Info List field provided in the embodiments of the present disclosure.
FIG. 11 is a format schematic diagram of another OBSS Info List field provided in the embodiments of the present disclosure.
FIG. 12 is a format schematic diagram of yet another OBSS Info List field provided in the embodiments of the present disclosure.
FIG. 13 is a schematic diagram of a manner for obtaining OBSS R-TWT information provided in the embodiments of the present disclosure.
FIG. 14 is a schematic diagram of another manner for obtaining OBSS R-TWT information provided in the embodiments of the present disclosure.
FIG. 15 is a schematic diagram of yet another manner for obtaining OBSS R-TWT information provided in the embodiments of the present disclosure.
FIG. 16 is a schematic diagram of still yet another manner for obtaining OBSS R-TWT information provided in the embodiments of the present disclosure.
FIG. 17 is a schematic diagram of performing establishment of an R-TWT according to the embodiments of the present disclosure.
FIG. 18 is a schematic diagram of performing establishment of an R-TWT according to the embodiments of the present disclosure.
FIG. 19 is a schematic diagram of performing establishment of an R-TWT according to the embodiments of the present disclosure.
FIG. 20 is a schematic diagram of a silent instance according to the embodiments of the present disclosure.
FIG. 21 is a schematic diagram of R-TWT packet incoming according to the embodiments of the present disclosure.
FIG. 22 is a schematic block diagram of an access point device provided according to the embodiments of the present disclosure.
FIG. 23 is a schematic block diagram of a station device provided according to the embodiments of the present disclosure.
FIG. 24 is a schematic block diagram of a communication device provided according to the embodiments of the present disclosure.
FIG. 25 is a schematic block diagram of a chip provided according to the embodiments of the present disclosure.
FIG. 26 is a schematic block diagram of a communication system provided according to the embodiments of the present disclosure.

### DETAILED DESCRIPTION

The technical solutions in the embodiments of the present disclosure will be described below in conjunction with the drawings in the embodiments of the present disclosure. It is apparent that the described embodiments are a part of embodiments of the present disclosure, rather than all of the embodiments of the present disclosure. For the embodiments of the present disclosure, all other embodiments obtained by those of ordinary skill in the art without paying any creative effort shall fall within the scope of protection of the present disclosure.

The technical solutions of the embodiments of the present disclosure may be applied to various communication systems, such as a wireless local area network (WLAN), a wireless fidelity (WIFI) or other communication systems.

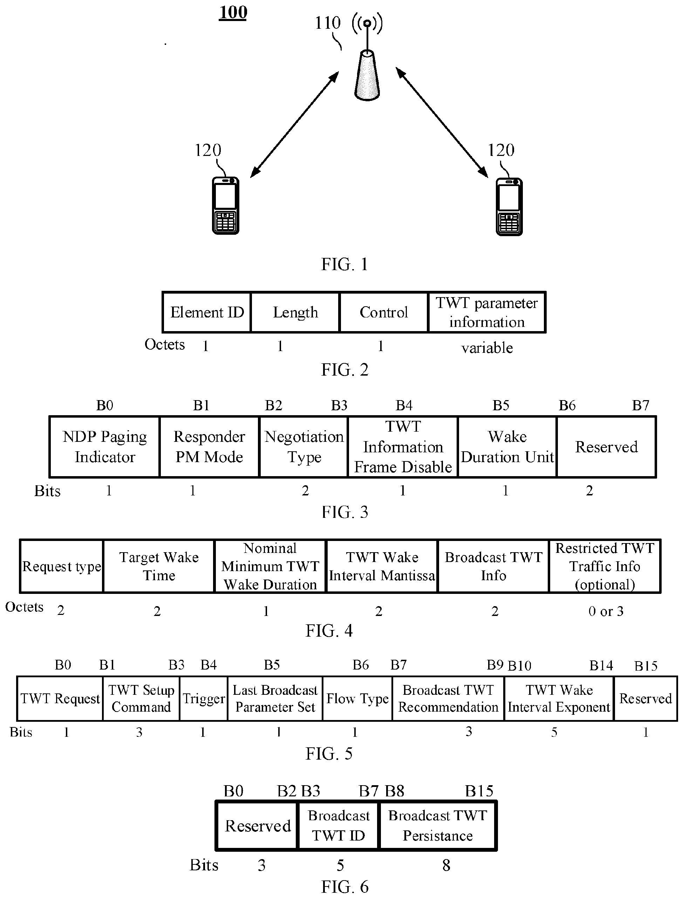

Exemplarily, a communication system 100 applied in the embodiments of the present disclosure is illustrated in FIG. 1. The communication system 100 may include an access point (AP) 110 and stations (STAs) 120 that accesses the network through the AP 110.

In some scenarios, the AP is referred to as an AP STA, that is, in a sense, the AP is also a kind of STA.

In some scenarios, the STA is also referred to as a non-AP STA.

The communication in the communication system 100 may be communication between the AP and the non-AP STA, or communication between the non-AP STA and the non-AP STA, or communication between the STA and a peer STA. The peer STA may refer to a device for peer communication with the STA. For example, the peer STA may be the AP or the non-AP STA.

The AP is equivalent to a bridge connecting a wired network and a wireless network, and its main function is to connect various wireless network clients together and then connect the wireless network to Ethernet. An AP device may be a terminal device (such as a mobile phone) or network device (such as a router) with a wireless-fidelity (WIFI) chip.

It should be understood that a role of the STA in the communication system is not absolute. For example, in some scenarios, when the mobile phone is connected to the router, the mobile phone is a non-AP STA. In a case where the mobile phone serves as a hotspot for other mobile phones, the mobile phone plays the role of an AP.

The AP and non-AP STAs may be devices used in Internet of Vehicles; Internet of Things (IoT) nodes and sensors in the IoT; smart cameras, smart remote controls, smart water and electricity meters in a smart home; and sensors in a smart city.

In some embodiments, the non-AP STA may support 802.11be standard. The non-AP STA may also support various current and future 802.11 family wireless local area network (WLAN) standards, such as 802.11ax, 802.11ac, 802.11n, 802.11g, 802.11b and 802.11a.

In some embodiments, the AP may be a device supporting the 802.11be standard. The AP may also be a device that supports various current and future 802.11 family WLAN standards, such as 802.11ax, 802.11ac, 802.11n, 802.11g, 802.11b and 802.11a.

In the embodiments of the present disclosure, the STA may be a mobile phone, a pad, a computer, a virtual reality (VR) device, an augmented reality (AR) device, a wireless device in industrial control, a set-top box, a wireless device in self driving, a vehicle-mounted communication device, a wireless device in remote medical, a wireless device in smart grid, a wireless device in transportation safety, a wireless device in a smart city, or a wireless device in a smart home, a wireless communication chip, an application specific integrated circuit (ASIC), a system on chip (SOC), etc. that supports WLAN/WiFi technology.

The bands supported by the WLAN technology may include but are not limited to, low bands (2.4 GHz, 5 GHz, 6 GHz) and high bands (45 GHz, 60 GHz).

FIG. 1 exemplarily illustrates an AP STA and two non-AP STAs. Optionally, the communication system 100 may include multiple AP STAs and other numbers of non-AP STAs, which are not limited in the embodiments of the present disclosure.

It should be understood that a device having a communication function in the network or system in the embodiments of the present disclosure may be referred to as a communication device. By taking the communication system 100 illustrated in FIG. 1 as an example, the communication device may include the AP 110 with the communication function and the STAs 120 with the communication function, and the AP 110 and the STAs may be specific devices in the embodiments of the present disclosure, which will not be repeated here. The communication devices may further include other devices in the communication system 100, such as a network controller, a gateway, and other network entities, which are not limited in the embodiments of the present disclosure.

It should be understood that the terms "system" and "network" are often used interchangeably herein. The term "and/or" herein is merely a description of the association relationship of associated objects, indicating that there may be three relationships. For example, A and/or B may mean three cases: A alone, A and B both, and B alone. In addition, the character "/" herein generally indicates that association objects before and after it are in an "or" relationship.

It should be understood that the "indication" mentioned in the embodiments of the present disclosure may be a direct indication, an indirect indication, or an indication of an associated relationship. For example, A indicates B, which may mean that A directly indicates B, for example, B may be obtained through A; it may also mean that A indirectly indicates B, for example, A indicates C, and B may be obtained through C; and it may also mean that there is an association relationship between A and B.

In the description of the embodiments of the present disclosure, the term "corresponding" may indicate that there is a direct or indirect correspondence between two items, or an association relationship between the two items, or a relationship of indicating and being indicated, configuring and being configured, etc.

In the embodiments of the present disclosure, "predefined" may be implemented by pre-saving corresponding codes, tables or other manners that may be used to indicate relevant information in a device (for example, including the AP and the STA). The present disclosure does not limit its specific implementation. For example, predefined may refer to defined in the protocol.

To facilitate understanding of the technical solutions of the embodiments of the present disclosure, a Broadcast TWT related to the present disclosure will be described below.

The TWT is a timed wake-up power save mode proposed in 802.11ax. In order to reduce contention between STAs and an amount of time that a STA using power save mode needs to wake up, a mechanism that the STA wakes up only during a predefined SP to perform frame interaction with an AP, and continues to sleep after the end of the SP is proposed in the TWT.

The Broadcast TWT is a TWT power save mode managed by the AP. In the Broadcast TWT, there are interactive actions of joining and leaving a group. The STA is required to apply to the AP for joining the group before using the Broadcast TWT, and the interactive action of joining the group is completed by carrying a TWT element in a management frame interacting with the AP, where the TWT element is used for carrying Broadcast TWT parameter information corresponding to a Broadcast TWT requested to join. When the STA completes joining the group, the STA will work according to a TWT SP most recently received, and such type of STA is referred to as "TWT Scheduled STA" and the AP is referred to as "TWT Scheduling AP". In such mechanism, the TWT SP is declared by the AP, and in general, the AP declares an established TWT SP between the AP and an STA associated with the AP in each Beacon frame. The STA wakes up after the start of the TWT SP, and the AP transmits a broadcast Trigger frame to discover which STAs are in an awake state and transmits data frames to these STAs. When the AP has completed transmission, the STA enters a sleep state until a time of the next corresponding Broadcast TWT SP arrives.

The format of the TWT element will be described below in conjunction with FIGS. 2 to 6.

FIG. 2 is a format schematic diagram of a TWT element.

As illustrated in FIG. 2, the TWT element includes following fields:
an Element ID field, a Length field, a Control field and a TWT Parameter Information field, which are used for carrying TWT parameter information. Exemplarily, the number of octets corresponding to the above fields is: 1, 1, 1 and variable, respectively.

FIG. 3 is a format schematic diagram of a Control field in the TWT element.

As illustrated in FIG. 3, the Control field may include following fields:
a Neighbor Discovery Protocol (NDP) paging recording (NDP Paging Indicator) field, a Responder PM Mode field, a Negotiation Type field, a TWT Information Frame Disable field, a Wake Duration Unit field, a Link ID Bitmap Present field (or referred to as a Link ID Present field) and a Reserved field.

In some embodiments, the high-order bit (i.e., B3) of the Negotiation Type field is a Broadcast field, which is used for indicating whether the TWT element is a Broadcast TWT element. For example, the Broadcast field is set to 1, representing that the TWT element is the Broadcast TWT element. The value of the Negotiation Type field being set to 2 is used for broadcasting TWT announcements, and the value of the Negotiation Type field being set to 3 is used for broadcasting TWT member management.

In some embodiments, when the value of the Broadcast field in the Control field is 1 (i.e., the TWT element is the Broadcast TWT element), the TWT Parameter Information field in the TWT element is used for carrying the Broadcast TWT parameter information.

In some embodiments, the Wake Duration Unit field represents the minimum time unit for setting the TWT length (duration).

As an example, the Wake Duration Unit field is set to 0, representing that the minimum time unit is 256 microseconds; and the Wake Duration Unit field is set to 1, representing that the minimum time unit is TU.

In some embodiments, the TWT Parameter Information field in the TWT element may include one or more Broadcast TWT Parameter set fields.

FIG. 4 is an exemplary format diagram of a Broadcast TWT Parameter set field.

As illustrated in FIG. 4, the Broadcast TWT Parameter set field includes at least one of following fields:
a Request Type field, a Target Wake Time field, a Nominal Minimum TWT Wake Duration field, a TWT Wake Interval Mantissa field, a Broadcast TWT Info field, or a Restricted TWT Traffic Info field (optional).

In addition, as illustrated in FIG. 5, the Request Type field includes at least one of following fields:
a TWT Request field, a TWT Setup Command field, a Trigger field, a Last Broadcast Parameter Set field, a Flow Type field, a Broadcast TWT Recommendation field, a TWT Wake Interval Exponent field, or a Reserved bit field.

In some embodiments, the TWT Request field is set to 1, representing that the STA transmitting the frame carrying the TWT element is a TWT scheduled STA; and the TWT Request field is set to 0, representing that the STA transmitting the frame carrying the TWT element is a TWT scheduling AP.

In some embodiments, the TWT Setup Command field is used for indicating that the types of TWT setup command when the STA negotiates TWT parameters with the AP. For example, the value of the TWT Setup Command field being set to 0 represents a Request TWT type, which is valid only when the value of the TWT Request field is 1, representing that the TWT scheduled STA requests to join the TWT. The value of the TWT Setup Command field being set to 1 represents a Suggest TWT type, which is valid only when the value of the TWT Request field is 1. The value of the TWT Setup Command field being set to 2 represents a Demand TWT type, which is valid only when the value of the TWT Request field is 1. The value of the TWT Setup Command field being set to 2 represents an Accept TWT type, which is valid only when the value of the TWT Request field is 0, representing that the TWT scheduling AP accepts TWT parameters indicated by the TWT Scheduled STA in the TWT element. The TWT Setup Command may further be used for an unsolicited TWT response.

In some embodiments, the Trigger field is used for indicating whether a Trigger frame needs to be transmitted. For example, when the Trigger field is set to 1, representing that a Trigger frame is transmitted at least once in the TWT SP.

In some embodiments, the Last Broadcast Parameter Set field is used for indicating whether the broadcast TWT Parameter set field is the last Broadcast TWT Parameter set field in the TWT Parameter Information field.

In some embodiments, the Broadcast TWT Recommendation field indicates a recommended value of the frame type transmitted by the TWT scheduled STA and the scheduling AP during the TWT SP.

In some embodiments, when the Broadcast TWT Recommendation field in the TWT element is equal to 4, the Broadcast TWT element is an R-TWT element. In this case, the TWT parameter information carried in the TWT element is also referred to as R-TWT parameter information.

In some embodiments, the TWT Wake Interval Mantissa field and the TWT Wake Interval Exponent field are used for determining a TWT Wake Interval, and the TWT Wake Interval represents an average time that the TWT scheduled STA passes between consecutive TWT SPs. For example, TWT wake interval=(TWT Wake Interval Mantissa)*2^(TWT Wake Interval Exponent) microseconds.

In some embodiments, for the Target Wake Time field: when the TWT element is transmitted by the TWT scheduled STA and the TWT Setup Command field represents the Suggest TWT type or Demand TWT type, the meaning of the Target Wake Time field is an unsigned integer that corresponds to the Time Synchronization Function (TSF) time (i.e., the start time of the TWT SP) at which the STA is requested to wake up. When the TWT element is transmitted by the TWT scheduled STA and the TWT Setup Command field represents the

Request TWT type, the value of the target Wake Time field is set as 0.

In some embodiments, the Nominal Minimum TWT Wake Duration field represents the minimum time of the TWT SP required by the TWT scheduled STA in units of a value indicated by the Wake Duration Unit field.

Further, as illustrated in FIG. 6, the Broadcast TWT Info field includes at least one of following fields:
a Broadcast TWT identify (Broadcast TWT ID) field, which identifies a unique Broadcast TWT jointly with an MAC address of the AP; or
a Broadcast TWT Persistence field, which is used for indicating the number of Target Beacon Transmission Times (TBTT)s for which the Broadcast TWT parameter information is present (or valid). Where the number of beacon intervals while the Broadcast TWT parameter information is present is equal to the value of the Broadcast TWT Persistence field plus 1, the value of the Broadcast TWT Persistence field being set as 255 represents that the TWT is present indefinitely until the TWT is terminated by other means, and other values of the Broadcast TWT persistence field represent that the TWT is present within a limited duration.

In some embodiments, each Broadcast TWT is uniquely identified by a <Broadcast TWT ID, MAC address> tuple, where the Broadcast TWT ID is the value of the Broadcast TWT ID field, the Broadcast TWT ID is greater than 0, and the MAC address is the MAC address of the TWT scheduling AP.

In some embodiments, the Broadcast TWT may be established in the following manners.

Manner 1: the STA actively initiates the setup request of the Broadcast TWT to the AP through including the TWT element whose Negotiation Type field is equal to 3 in the Association request/Reassociation request or the TWT Setup frame. The Broadcast TWT parameter set field in the TWT element indicates the Broadcast TWT ID corresponding to the Broadcast TWT that the STA requests to join.

Manner 2: the AP may initiate an unsolicited TWT response. For example, the AP may allocate the Broadcast TWT to the receiving STA by including the TWT element whose Negotiation Type field is equal to 3 in the Association request/Reassociation request or the TWT Setup frame, where the receiving STA supports the Broadcast TWT. For example, when the STA reports capability information to the AP, the Broadcast TWT Support field in the capability information is set to 1 (representing that the STA supports the Broadcast TWT).

In some embodiments, the TWT scheduling AP may announce established Broadcast TWTs within a basic service set (BSS) to which the AP belongs, that is, a Broadcast TWT scheduling table. For example, the Broadcast TWT scheduling table may be carried in a frame of a TWT element whose Negotiation Type field is set to 2 to announce, for example, to announce via a beacon frame.

In some embodiments, the TWT scheduling AP may include a high efficiency (HE) AP that supports the Broadcast TWT (e.g., dot11TWTOptionActivated is true), and the TWT scheduled STA may be a non-AP HE STA. The non-AP HE STA may transmit HE capability information to the AP, where the HE capability information is carried in a HE capability element. The HE capability element includes a Broadcast TWT Support field. The Broadcast TWT Support field is set to 1, representing that the non-AP HE STA supports the Broadcast TWT, and the non-AP HE STA may receive a frame carrying a Broadcast TWT element transmitted by the HE AP which is taken as the TWT scheduling AP.

In some scenarios, with the increase in the number of low-latency and high-definition video streaming application scenarios, data transmission has put forward higher requirements on network latency and network capacity, such as, in real-time video streaming, virtual reality (VR), augmented reality (AR) and other application scenarios, a large amount of data is generated in one period and needs to be transmitted out in a short period of time. However, a transmitting device may not be able to compete for a right to use a channel in a short period of time, and a predictable and stable service time is needed to complete transmission of latency sensitive data. Therefore, a type of TWT, that is, an R-TWT, is introduced, which is able to use enhanced medium access protection and resource reservation mechanisms for delivery of latency sensitive traffic. That is, the R-TWT may be considered as a new Broadcast TWT Recommendation field defined on a basis of the TWT.

In some embodiments, when the value of the Broadcast TWT Recommendation field is equal to 4, the Broadcast TWT parameter set carried in the Broadcast TWT parameter set field is an R-TWT parameter set. In this case, the Broadcast TWT parameter set field is an R-TWT parameter set field.

In some embodiments, when the TWT element includes the R-TWT parameter set field only, the TWT element is referred to as an R-TWT element.

In some embodiments, when an R-TWT has been established or modified within the BSS to which the AP belongs, the AP may declare the R-TWT schedule table. For example, the Broadcast TWT element is included in a management frame (e.g., a beacon frame), in which the Broadcast TWT element is used for announcing updated R-TWT scheduling information.

In some embodiments, the establishment of the TWT may be implemented by interacting the TWT setup frames between the AP and the STA. For example, the STA may transmit a TWT setup request frame to the AP to request establishment of the TWT SP, and the AP may reply with a TWT setup response frame to the STA, to indicate the state of the requested TWT SP, for example, whether to agree to the establishment of the TWT SP or reject the establishment of the TWT SP.

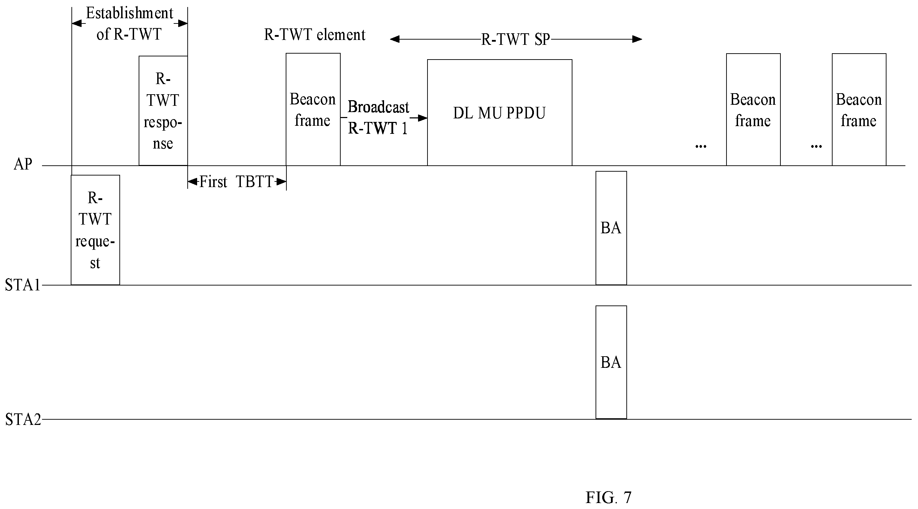

FIG. 7 is a schematic diagram of a procedure of establishing and using an R-TWT. In the example of FIG. 7, an R-TWT is not established between STA1 and AP, STA1 may transmit an R-TWT request frame to AP to request establishment of the R-TWT between AP and STA1, where the R-TWT request frame includes an R-TWT parameter set requested to be established by STA1, and the AP replies with an R-TWT response frame to agree to the establishment of the R-TWT. During the establishment of the R-TWT, STA1 is referred to as an "R-TWT scheduled STA" and AP is referred to as "an R-TWT scheduling AP".

In the example, the R-TWT established between STA1 and AP may be same as an R-TWT established between STA2 and AP, that is, STA1 may join the R-TWT established between STA2 and the AP, denoted as R-TWT 1.

In some embodiments, the R-TWT request frame may include an R-TWT element, and the R-TWT element is used for carrying an R-TWT parameter set that STA1 requested to establish.

Further, AP transmits a Beacon frame at the TBTT moment. The Beacon (frame) includes an R-TWT element in which R-TWT 1 is indicated. For example, during broadcasting of R-TWT 1 SP, AP transmits downlink latency sensitive traffic to the R-TWT scheduled STA. STA 1 and STA 2 receive the Beacon (frame). STA 1 and STA 2 receive downlink data transmitted by AP, within a subsequent R-TWT 1 SP, such as Downlink Multi-User Physical layer protocol data unit (DL MU PPDU), and further reply to AP with a block acknowledgment (Block Ack, BA) frame.

Table 1 is a frame format example of a TWT Setup frame.

**Table 1**

| Order | Information |
|---|---|
| 1 | Category |
| 2 | Unprotected S1G Action |
| 3 | Dialog Token |
| 4 | one or more TWT elements |

Where the description of the format of the TWT element may refer to related description in FIG. 2 to FIG. 6.

In some embodiments, the STA in the R-TWT SP need to follow a certain rule when performing channel access.

For example, the STA holding a transmission opportunity (TXOP) needs to release the TXOP (or in other words, end the TXOP) before the start time of the R-TWT SP announced by the associated AP. The STA is an STA that supports the R-TWT (e.g., dot11RestrictedTWTOptionImplemented is set to true), for example, a non-AP extreme high throughput (EHT) STA that supports the R-TWT.

STAs using the same R-TWT may be considered as belonging to one group. In one BSS, STAs that are not within one group need to back off within the R-TWT SPs used by other groups.

For example, established R-TWTs within one BSS include R-TWT 1 and R-TWT 2, where STA1 and STA2 belong to a group corresponding to R-TWT 1, while STA3 and STA4 belong to a group corresponding to R-TWT 2. Within R-TWT 1 SP, STA3 and STA4 need to back off, that is, no data transmission is performed; and within R-TWT 2 SP, STA1 and STA2 need to back off, that is, no data transmission is performed.

However, in the actual applications, data transmission of devices within other BSSs may further interfere with data transmission of devices within this BSS during the R-TWT SP.

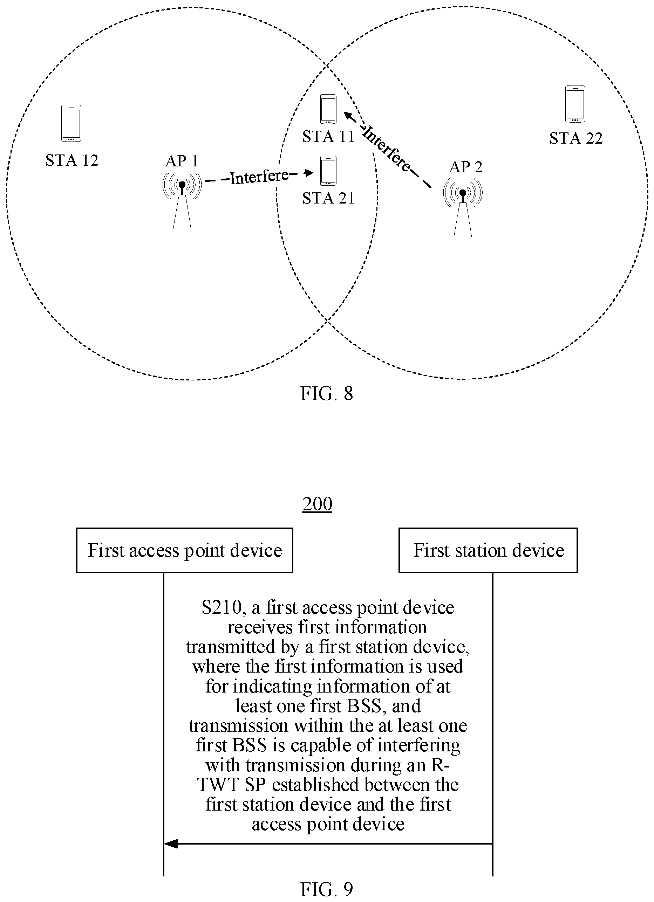

As illustrated in FIG. 8, AP1 is associated with STA11 and STA12, and AP2 is associated with STA21 and STA22. It is assumed that an R-TWT is established between AP1 and STA11, denoted as R-TWT 1. During R-TWT 1 SP, if STA12 holds the right to use a TXOP, STA12 needs to actively terminate the TXOP before the start of R-TWT 1 SP, to avoid causing interference to data transmission of STA11 within R-TWT 1 SP.

However, during R-TWT 1 SP, the devices within a BSS to which the AP2 belongs may still compete for channel normally, so data transmission of the devices within the BSS to which AP2 belongs during this period may cause interference to latency sensitive data transmission of STA11. For example, if STA22 is holding a TXOP and communicating with AP2 during R-TWT 1 SP, it may cause interference to data reception of STA11.

Moreover, since AP2 and AP1 cannot be informed of the established R-TWTs within the BSS to which each other belongs, there may be a problem of overlap in time between the R-TWT established between STA22 and AP2 and the R-TWT established between AP1 and STA11, which may cause mutual interference of data transmissions within the two BSSs.

Therefore, how to establish an R-TWT to reduce interference to data transmission within the R-TWT is an urgent problem to be solved.

To facilitate understanding of the technical solutions in the embodiments of the present disclosure, the technical solutions of the present disclosure will be described in detail below through specific embodiments. The following related technologies may be, as optional solutions, arbitrarily combined with the technical solutions in the embodiments of the present disclosure, and those combined solutions all fall within the protection scope in the embodiments of the present disclosure. The embodiments of the present disclosure include at least part of following contents.

FIG. 9 is a schematic interaction diagram of a wireless communication method 200 according to the embodiments of the present disclosure. As illustrated in FIG. 9, the method 200 includes the following contents.

In S210, a first access point device receives first information transmitted by a first station device, where the first information is used for indicating information of at least one first BSS, and transmission within the at least one first BSS is capable of interfering with transmission during an R-TWT SP established between the first station device and the first access point device.

In some embodiments, the first access point device may establish an R-TWT between the first access point device and the first station device according to the first information.

In some embodiments, there is no overlap in time between the R-TWT between the first AP and the first STA established according to the first information and an established R-TWT within the at least one first BSS.

In the embodiments of the present disclosure, for the convenience of distinction and description, the R-TWT between the first AP and the first STA established according to the first information is denoted as a target R-TWT, and the established R-TWT within the at least one first BSS is denoted as an OBSS R-TWT.

In some embodiments, there being no overlap in time between the target R-TWT and the OBSS R-TWT may mean that there is no overlap in time between the target R-TWT SP and the OBSS R-TWT SP. Similarly, there being no overlap in time between other two or more R-TWTs may be interpreted similarly.

In some embodiments, the first station device is a non-AP STA, or referred to as a first STA or a first non-AP STA.

In some embodiments, the first access point device is an AP STA, or referred to as a first AP or a first AP STA.

In the embodiments of the present disclosure, unless otherwise specified, the access point device and AP all refer to the AP STA, and the station device and STA all refer to the non-AP STA.

In some embodiments, the first AP and the first STA may be multi-link devices (MLDs).

That is, the first information may be used for establishment of an R-TWT between MLDs.

In some other embodiments, the first AP and the first STA may be single-link devices.

That is, the first AP and the first STA may be used for establishment of an R-TWT between single-link devices.

In some embodiments, the first access point device is an access point device associated with the first station device. That is, the first access point device and the first station device belong to the same BSS.

In some embodiments, the at least one first BSS may be an overlapping basic service set (OBSS) of a BSS to which the first AP belongs. That is, there is an overlap between the first BSS and the BSS to which the first AP belongs.

In some embodiments, the first AP and/or the first STA are within the OBSS. In other words, the first AP is an OBSS device and/or the first STA is an OBSS device. Where the OBSS device may refer to a device within the OBSS, and the OBSS device may receive signals transmitted within multiple BSSs. Therefore, the OBSS device may be interfered by signals transmitted within other BSSs other than the BSS to which the OBSS device belongs.

In some scenarios, when the BSS to which the first AP belongs is the target BSS, and the first AP is within an area in which the first BSS and the target BSS overlap (i.e., the first AP is the OBSS device), the first AP may receive the data transmission between the AP within the first BSS and its associated STA, where the data transmission is capable of interfering with the transmission between the first AP and the first STA. Therefore, combining with the established R-TWT information within the first BSS when the R-TWT between the first AP and the first STA is established, such as backing off the established R-TWT within the first BSS, it is beneficial for reducing the interference of the transmission within the first BSS to the transmission during the R-TWT SP between the first AP and the first STA.

In some other scenarios, when the BSS to which the first AP belongs is the target BSS, and the first STA is within an area in which the first BSS and the target BSS overlap (i.e., the first STA is the OBSS device), the first STA may receive the data transmission between the AP within the first BSS and its associated STA, where the data transmission is capable of interfering with the transmission between the first AP and the first STA. Therefore, combining with the established R-TWT information within the first BSS when the R-TWT between the first AP and the first STA is established, such as backing off the established R-TWT within the first BSS, it is beneficial for reducing the interference of the transmission within the first BSS to the transmission during the R-TWT SP between the first AP and the first STA.

In yet some other scenarios, when the BSS to which the first AP belongs is the target BSS, and the first STA and the first AP are both within an area in which the first BSS and the target BSS overlap (i.e., the first STA and the first AP are both OBSS devices), the first STA and the first AP may receive the data transmission between the AP within the first BSS and its associated STA, where the data transmission is capable of interfering with the transmission between the first AP and the first STA. Therefore, combining with the established R-TWT information within the first BSS when the R-TWT between the first AP and the first STA is established, such as backing off the established R-TWT within the first BSS, it is beneficial for reducing the interference of the transmission within the first BSS to the transmission during the R-TWT SP between the first AP and the first STA.

In some embodiments, the at least one first BSS may be considered as an interference BSS or an OBSS of the first STA, that is, the first STA is within the first BSS and the target BSS, therefore, the transmission within the first BSS may interfere with the transmission between the first STA and the first AP. Alternatively, it may also be understood that the at least one first BSS is an interference BSS corresponding to the R-TWT between the first STA and the first AP, that is, the transmission within the at least one first BSS may interfere with the transmission during the established R-TWT SP between the first STA and the first AP.

In some embodiments, the first STA may determine the interference BSS of the first STA by receiving a frame (e.g., a beacon frame).

For example, responsive to that the first STA receives a frame transmitted by an AP within other BSSs (i.e., BSSs other than the BSS to which the first STA belongs), the first STA may regard that the BSS is the interference BSS of the first STA.

As another example, the first STA may measure the signal (e.g., preamble signal) transmitted by the AP. If the received strength of signal is greater than a first threshold and the signal is not from an AP associated with the first STA, it may be determined that the BSS to which the AP transmitting the signal belongs is the interference BSS of the first STA.

Optionally, the received strength of signal may be the received signal strength indication (RSSI).

In some embodiments, the first information includes at least one of:
identify (ID) information of the at least one first BSS (e.g., BSSID) or color information of the first BSS (e.g., BSS Color);
established R-TWT information within the at least one first BSS; or
received strength information of signal transmitted by the first station device to an access point device within the at least one first BSS.

It should be understood that the above description only takes that BSSID or BSS Color identifies the BSS as an example. In other embodiments, other information capable of uniquely identifying the BSS may further be used to identify the BSS, and the present disclosure is not limited thereto.

In some embodiments, the established R-TWT information within the at least one first BSS may include specific R-TWT parameters, such as the TWT parameters illustrated in FIG. 4 to FIG. 6, for example, the value of the target wake time, the nominal minimum TWT wake duration, the TWT wake time interval. The R-TWT parameters are used for determining time information of the R-TWT SP, such as, start time, duration and period.

In some other embodiments, the established R-TWT information within the at least one first BSS may include identify information corresponding to the R-TWT parameters, such as an R-TWT ID, where the R-TWT ID and an MAC address of the AP jointly identify a unique R-TWT. In such case, the first STA does not need to carry specific R-TWT parameters, which is beneficial for reducing signaling overhead.

In some embodiments, the received strength information of signal transmitted by the first station device to the access point device within the at least one first BSS may refer to received strength information of signal (for example, RSSI information) transmitted by the first STA to the AP within the first BSS. The received strength of signal transmitted by the first STA to the AP within the first BSS may reflect interference condition of the signal within the first BSS to the first STA, for example, large received strength may be considered that the interference to the first STA is large, and vice versa. Combining with the established R-TWT within the first BSS with larger received strength when the R-TWT between the first AP and the first STA is established, it is beneficial for reducing the interference of the transmission within the established R-TWT within the first BSS to the transmission within the R-TWT between the first AP and the first STA.

In some embodiments, the RSSI may be obtained by measuring a received physical layer preamble through the first STA.

It should be understood that the present disclosure does not limit a frame used for carrying the first information, and the first information may be carried by a frame transmitted by the STA to the AP, the frame includes but not limited to such as an Association Request frame, a Reassociation Request frame, an authentication request frame, a Probe Response frame, and a TWT setup request frame.

In some embodiments, the first information is carried in a first request frame, where the first request frame is used for requesting establishment of the R-TWT between the first station device and the first access point device. That is, the first request frame may be a TWT setup request frame, or referred to as an R-TWT setup request frame or a TWT setup frame.

When initiating a setup request of the R-TWT, the first STA indicates interference BSS information of the first STA to the first AP. In this way, when the first AP establishes the R-TWT between the first AP and the first STA, it is beneficial for avoiding the established R-TWT within the interference BSS, and reducing the interference of the data transmission within the established R-TWT within the first BSS to the data transmission during the R-TWT SP between the first AP and the first STA.

In some other embodiments, the first request frame may be an Association Request frame, a Reassociation Request frame, an authentication request frame, or the like, and the present disclosure is not limited thereto.

In some embodiments, the first request frame further includes R-TWT parameters that the first STA requests to establish, such as, the target wake time, the nominal minimum TWT wake duration, and the TWT wake time interval. The R-TWT parameters are used for determining time information of the R-TWT SP between the first AP and the first STA, such as start time, duration and period.

In some embodiments, there is no overlap (or in other words, there is no conflict) in time between an R-TWT determined according to the R-TWT parameters that the first STA requests to establish and the established R-TWT within the at least one first BSS. That is, the R-TWT parameters requested by the first STA avoid the established R-TWT within the interference BSS of the first STA.

In some embodiments of the present disclosure, the method 200 further includes that the first access point device transmits a first response frame to the first station device, where the first response frame is a response frame of the first request frame.

Optionally, the first response frame is used for indicating that agreement or rejection the R-TWT requested by the first request frame to establish.

Optionally, the first response frame may carry the R-TWT parameters used for establishing the R-TWT between the first AP and the first STA.

Optionally, the R-TWT parameters carried in the first response frame and the R-TWT parameters carried in the first request frame may be the same or different.

In some embodiments, there is no overlap (or in other words, there is no conflict) in time between the R-TWT determined according to the R-TWT parameters in the first response frame and the established R-TWT within the at least one first BSS.

That is, the R-TWT between the first AP and the first STA established by the first AP avoids the established R-TWT within the interference BSS of the first STA. In other words, when the first AP establishes the R-TWT with the first STA, the selected R-TWT parameters do not conflict with the R-TWT parameters corresponding to the established R-TWT within the at least one first BSS.

It should be understood that the present disclosure does not limit the manner in which the first information is carried in the frame, such as the first information is carried in an existing element or field in the frame, or a new element or field may be added to carry the first information. The manner in which the first information is carried in the first request frame is described below with reference to specific examples, but the present disclosure is not limited thereto. Other alternative manners derived from the examples of the present disclosure all fall within the protection scope of the present disclosure.

In some embodiments, the first request frame includes a first TWT element, and the first information is carried in the first TWT element. Optionally, an existing field (e.g., reserved field) or a newly added field in the TWT element may be used for carrying the first information.

In some embodiments, the first TWT element includes an OBSS Info List field, where the OBSS Info List field is used for carrying the first information. The OBSS Info List field is also referred to as an Interference BSS Info field.

For example, an Interference BSSID Info field is added at the end of a Broadcast TWT Parameter Set field in the first TWT element, in which the length of the interference BSSID info field is variable and the specific length determined by the size of the interference BSS information reported by the first STA.

In some embodiments, the first TWT element further includes an OBSS Info List Present field, or referred to as an Interference BSS Info Present field, which is used for indicating whether the first TWT element includes the Interference BSS Info Field.

For example, if the value of the OBSS Info List Present field is 1, it represents that the OBSS Info List field is present in the first TWT element; or if the value of the OBSS Info List Present field is 0, it represents that the OBSS Info List field is not present in the first TWT element.

In some embodiments, the first TWT element is further used for carrying the R-TWT parameters that the first STA requests to establish. For example, the first TWT element includes a TWT Parameter Information field, where the R-TWT parameters that the first STA requests to establish are carried in the TWT Parameter Information field. The specific format of the TWT Parameter Information field refers to the format illustrated in FIG. 2 to FIG. 6.

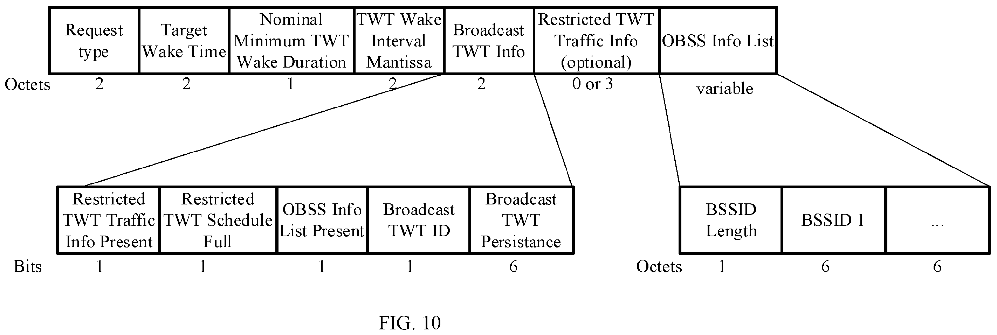

The specific design of the OBSS Info List field in the first TWT element is illustrated in conjunction with FIG. 10 to FIG. 12.

Case 1: report an interference BSS and identify the interference BSS using a BSSID field.

FIG. 10 is a format schematic diagram of a format of an OBSS Info List field provided in the embodiments of the present disclosure. In the example of FIG. 10, the BSSID field is used for identifying the interference BSS. The OBSS Info List field is carried in a Broadcast TWT Parameter Set field of the first TWT element.

As illustrated in FIG. 10, the OBSS Info List field includes a BSSID Size field and/or at least one BSSID field, where the BSSID Size field is used for indicating the number of BSSID fields included in the OBSS Info List field, that is, the number of interference BSSs, and the BSSID field is used for indicating ID information of the first BSS, that is, BSSID.

Optionally, the length of the BSSID field may be 6 octets, and the at least one BSSID field may occupy the 6 multiplied by n (6*n) octets, where n is the number of the interference BSSs.

Optionally, the length of the BSSID Size field may be 1 octet or other lengths, which is specifically determined by the number of interference BSSs that may be reported at most.

In some embodiments, when the value of the Broadcast TWT Recommendation field in the Request Type field in the Broadcast TWT Parameter Set field is 4 (i.e., the TWT is an R-TWT), the OBSS Info List field is present.

In some embodiments, during an R-TWT establishment phase, the first TWT element may be carried in the TWT Setup Request frame. In this case, the OBSS Info List field indicates, through one or more BSSIDs (i.e., BSSID fields), the interference BSS information that the first STA may be may be subjected to.

In some embodiments, during an R-TWT broadcast phase, the first TWT element may be carried in a Beacon frame. In this case, the OBSS Info List field indicates, through one or more BSSIDs (i.e., BSSID fields), the interference BSS information that a device using the R-TWT may be subjected to.

Optionally, the Broadcast TWT Parameter Set field further includes an OBSS Info List Present field used for indicating whether the Broadcast TWT Parameter Set field includes an OBSS Info List field.

For example, if the value of the OBSS Info List Present field is 1, it represents that the OBSS Info List field is present in the Broadcast TWT Parameter Set field; or if the value of the OBSS Info List Present field is 0, it represents that the OBSS Info List field is not present in the Broadcast TWT Parameter Set field.

Optionally, as illustrated in FIG. 10, the OBSS Info List Present field is included in the Broadcast TWT Info field in the Broadcast TWT Parameter Set field.

Case 2: report an interference BSS and identify the interference BSS using a BSS Color field.

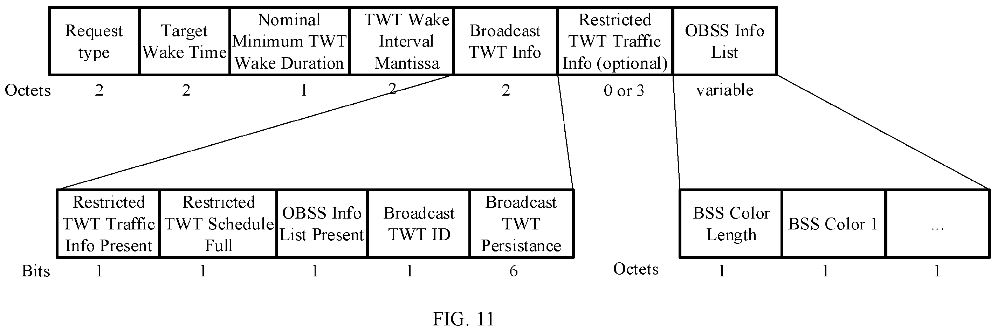

FIG. 11 is a format schematic diagram of another format of an OBSS Info List field provided in the embodiments of the present disclosure. In the example of FIG. 11, the BSS Color field is used for identifying the interference BSS.

As illustrated in FIG. 11, the OBSS Info List field includes a BSS Color Size field and/or at least one BSS Color field, where the BSS Color Size field is used for indicating the number of BSS Color fields included in the OBSS Info List field, and the BSS Color field is used for indicating color information of the first BSS.

Optionally, the length of the BSS Color field may be 6 bits or 1 octet. For example, high-order or low-order 6 bits in 1 octet are used for indicating the BSS color field.

Optionally, the length of the BSS Color Size field may be 1 octet or other lengths, which is specifically determined by the number of interference BSSs that may be reported at most.

In some embodiments, when the value of the Broadcast TWT Recommendation field in the Request Type field in the Broadcast TWT Parameter Set field is 4 (i.e., the TWT is an R-TWT), the OBSS Info List field is present.

In some embodiments, during an R-TWT establishment phase, the first TWT element may be carried in the TWT Setup Request frame. In this case, the OBSS Info List field indicates, through one or more BSS Color, the interference BSS information that the first STA may be may be subjected to.

In some embodiments, during an R-TWT broadcast phase, the first TWT element may be carried in a Beacon frame. In this case, the OBSS Info List field indicates, through one or more BSS Colors, the interference BSS information that a device using the R-TWT may be subjected to.

Optionally, the Broadcast TWT Parameter Set field further includes an OBSS Info List Present field used for indicating whether the Broadcast TWT Parameter Set field includes an OBSS Info List field.

For example, if the value of the OBSS Info List Present field is 1, it represents that the OBSS Info List field is present in the Broadcast TWT Parameter Set field; or if the value of the OBSS Info List Present field is 0, it represents that the OBSS Info List field is not present in the Broadcast TWT Parameter Set field.

Optionally, as illustrated in FIG. 11, the OBSS Info List Present field is included in the Broadcast TWT Info field in the Broadcast TWT Parameter Set field.

Case 3: report an interference BSS and RSSI information corresponding to the interference BSS.

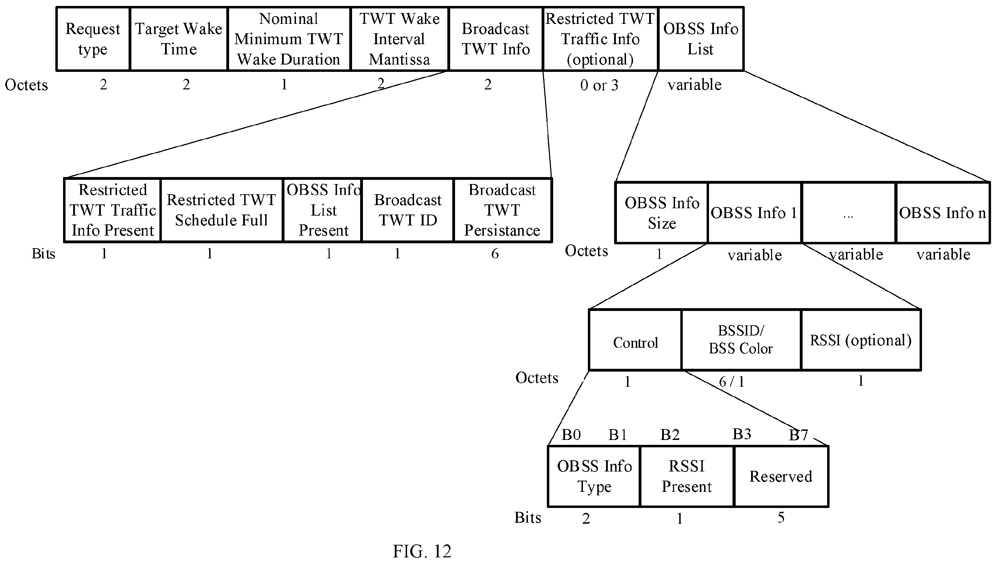

FIG. 12 is a format schematic diagram of yet another format of an OBSS Info List provided in the embodiments of the present disclosure. In the example of FIG. 12, the BSSID or BSS Color field is used for identifying the interference BSS, and RSSI information corresponding to the interference BSS is reported to the first AP.

As illustrated in FIG. 12, the OBSS Info List field includes an OBSS Info Size field and/or at least one OBSS Info field, where the OBSS Info Size field is used for indicating the number of OBSS Info fields included in the OBSS Info List field, that is, the number of interference BSSs, and the OBSS Info field is used for indicating ID information or color information of the at least one first BSS and the received strength information of signal transmitted by the first STA to the AP within the at least one first BSS, such as RSSI.

In some embodiments, as illustrated in FIG. 12, the BSS Info field includes a BSSID/BSS Color field and an RSSI field (optional). The BSSID/BSS Color field is used for indicating the interference BSS of the first STA, and the RSSI field is used for indicating the RSSI of signal transmitted by the first STA to the AP within the interference BSS, in which the interference BSS is indicated by the BSSID/BSS Color field.

Optionally, the value range of the RSSI information is 0 to 255.

Optionally, the OBSS Info field further includes a Control field used for indicating control information of other fields in the OBSS Info field.

For example, the Control field may include at least one of following fields:
an OBSS Info Type field or referred to as an interference BSS Info Type field, used for indicating whether the BSSID/BSS Color field is used for indicating the BSSID or the BSS Color; or
an RSSI Present field, used for indicating whether the OBSS Info field includes an RSSI field.

Optionally, the OBSS Info Type field may occupy 1 bit or 2 bits, which is specifically determined by the type of the OBSS identification that may be indicated. Exemplarily, if the value of the OBSS Info Type field is 0, it represents that the BSSID/BSS Color field is used for indicating the BSSID; or if the value of the OBSS Info Type field is 1, it represents that the BSSID/BSS Color field is used for indicating the BSS Color.

Optionally, the RSSI present field may occupy 1 bit. For example, the value of the 1 bit being 1 represents that the OBSS Info field includes the RSSI field; otherwise, the OBSS Info field does not include the RSSI field.

Optionally, during an R-TWT establishment phase, the value of the RSSI Present field is 1, and in an R-TWT broadcast phase, the value of the RSSI Present field is 0.

Optionally, when the type indicated by the OBSS Info Type field is BSSID, the BSSID/BSS Color field is used for indicating the BSSID, and the length of the BSSID/BSS Color field may be 6 octets. When the type indicated by the OBSS Info Type field is BSS Color, the BSSID/BSS Color field is used for indicating the BSS color, and in such case, the length of the BSSID/BSS Color field may be 6 bits or 1 octet, where high-order or low-order 6 bits of the 1 octet are used for indicating the BSS Color, and other 2 bits are taken as reserved bits.

Optionally, the RSSI indicated by the RSSI field may be determined according to the received signal strength of the Beacon frame transmitted by the first STA to the first AP.

In some embodiments, when the value of the Broadcast TWT Recommendation field in the Request Type field in the Broadcast TWT Parameter Set field is 4 (i.e., the TWT is an R-TWT), the OBSS Info List field is present.

In some embodiments, during an R-TWT establishment phase, the OBSS Info List field indicates, through one or more BSSIDs/BSS Colors (i.e., BSSID fields/BSS Color fields), the interference BSS that the first STA may be subjected to and the received strength information of signal within the interference BSS obtained by the first STA.

In some embodiments, during an R-TWT broadcast phase, the OBSS Info List field indicates, through one or more BSSIDs/BSS Colors (i.e., BSSID fields/BSS Color fields), the interference BSS information that a device using the R-TWT may be subjected to.

Optionally, the Broadcast TWT Parameter Set field further includes an OBSS Info List Present field used for indicating whether the Broadcast TWT Parameter Set field includes an OBSS Info List field.

For example, if the value of the OBSS Info List Present field is 1, it represents that the OBSS Info List field is present in the Broadcast TWT Parameter Set field; or if the value of the OBSS Info List Present field is 0, it represents that the OBSS Info List field is not present in the Broadcast TWT Parameter Set field.

Optionally, as illustrated in FIG. 12, the OBSS Info List Present field is included in the Broadcast TWT Info field in the Broadcast TWT Parameter Set field.

Case 4: report an interference BSS and established R-TWT information within the interference BSS.

In Case 4, the specific manners in which the first STA reports the interference BSS refer to the specific implementations in Case 1 and Case 2, which will not be repeated here.

In some embodiments, the established R-TWT information within the at least one first BSS and the identify information or color information of the at least one first BSS may be carried in the same element (such as, in the above first TWT element), or may be carried in different elements.

In some embodiments, the first TWT element may include at least one R-TWT parameter information field, each R-TWT parameter information field corresponds to a respective interference BSS, and the R-TWT parameter information field is used for indicating the established R-TWT information within the respective interference BSS.

In some other embodiments, the first request frame further includes at least one OBSS R-TWT element used for carrying the established R-TWT information within the at least one first BSS. The at least one OBSS R-TWT element is in one-to-one correspondence with at least one interference BSS of the first STA, and each OBSS R-TWT element is used for carrying the established R-TWT information within the corresponding interference BSS.

Table 2 is a frame format example of a TWT Setup frame according to the embodiments of the present disclosure.

**Table 1**

| Order | Information |
|---|---|
| 1 | Category |
| 2 | Unprotected S1G Action |
| 3 | Dialog Token |
| 4 | one or more TWT elements |
| 5 | zero or one or more OBSS R-TWT elements |

In some implementations, the information content of Order 5 may be added to the TWT Setup Request frame, so that the first STA may report the interference BSS and the established R-TWT information within the interference BSS to the first AP through the TWT Setup Request frame.

That is, the information content of Order 4 in the TWT Setup frame may be R-TWT parameters requested by the first STA, and the corresponding interference BSS; and the information content of Order 5 may be the established R-TWT information within the interference BSS.

In some embodiments, the format of the OBSS R-TWT element may refer to the format of the TWT element in FIG. 4 to FIG. 6, which will not be repeated here for the sake of brevity.

It should be understood that in the embodiments of the present disclosure, the OBSS R-TWT element may also be referred to as a TWT element or an R-TWT element. Since the OBSS R-TWT element is used for carrying the established R-TWT information within the OBSS, it is referred to as the OBSS R-TWT element for the convenience of distinction and description, but which should not constitute any limitation to the present disclosure.

Optionally, in Case 4, the first STA may further report RSSI information corresponding to the interference BSS to the first AP. The specific reporting manner refers to the related description in Case 3, which will not be repeated here for the sake of brevity.

In some embodiments of the present disclosure, the method 200 further includes that the first access point device obtains established R-TWT information within the at least one first BSS according to the first information.

In some embodiments, the established R-TWT information within the at least one first BSS is obtained from an AP within the at least one first BSS or the first STA.

In some embodiments, in a case where the first information includes the ID information or color information of the at least one first BSS but does not include the established R-TWT information within the at least one first BSS, the first AP obtains the established R-TWT information within the at least one first BSS from pre-stored information according to the ID information or color information of the at least one first BSS. The pre-stored information includes BSSIDs or color information of one or more BSSs and the established R-TWT information within the one or more BSSs.

For example, when receiving the first information transmitted by the first STA, the first AP may determine the interference BSS of the first STA according to the BSSID information or BSS color information carried in the first information, and then, search the established R-TWT information within the interference BSS from the pre-stored information. As such, the established R-TWT within the interference BSS may be avoided when the R-TWT between the first AP and the first STA is established, so as to reduce the interference of the transmission within the interference BSS to the transmission during an established R-TWT SP between the first AP and the first STA.

In some embodiments, the pre-stored information may be obtained from an associated STA of the first AP and/or a neighboring AP of the first AP.

For the sake of distinction and explanation, the established R-TWT information within the interference BSS is recorded as OBSS R-TWT information.

The following specific embodiments illustrate obtaining manners of the pre-stored information.

Manner 1: the pre-stored information is obtained from the neighboring AP.

Optionally, the pre-stored information is obtained during an R-TWT broadcast phase.

Optionally, the BSS to which the neighboring AP belongs and the BSS to which the first AP belongs are OBSSs.

In manner 1, the first AP may receive a frame transmitted by the neighboring AP, the neighboring AP may broadcast the established R-TWT information within the BSS to which the neighboring AP belongs, and thus the first AP may obtain the established R-TWT information within the BSS to which the neighboring AP belongs through receiving the frame transmitted by the neighboring AP. As such, the first AP may store the BSSID or color information of the BSS to which the neighboring AP belongs as well as the established R-TWT information between the neighboring AP and its associated STA. Since the AP may receive the frame transmitted by the neighboring AP, the transmission between the neighboring AP and its associated STA may interfere with the transmission between the first AP and its associated STA. Therefore, the first AP may store the above information.

Optionally, the neighboring AP may include an AP within the first BSS, and thus, the first AP may obtain the established R-TWT information within the first BSS through receiving the frame transmitted by the AP within the first BSS.

In some embodiments, the first AP may receive a Beacon frame transmitted by the neighboring AP (e.g., a second AP), and the Beacon frame includes established R-TWT information within the BSS to which the second AP belongs.

Optionally, the Beacon frame may further include interference BSS information (i.e., OBSS information) corresponding to the established R-TWT within the BSS to which the second AP belongs. The transmission within the interference BSS may interfere with the transmission within the established R-TWT within the BSS to which the second AP belongs, and the interference BSS information may, for example, be the BSSID or BSS Color corresponding to the interference BSS.

Optionally, the interference BSS information corresponding to the established R-TWT within the BSS to which the second AP belongs may be obtained by the second AP from the associated STA of the second AP. For example, the associated STA of the second AP may report the interference BSS information of the associated STA (i.e., OBSS information) to the second AP when requesting the establishment of an R-TWT, and the specific reporting manner refers to the related implementations of the first STA reporting the interference BSS information (i.e., the OBSS information) to the first AP, which will not be repeated here for the sake of brevity. As such, the second AP may consider that the OBSS reported by the associated STA is the interference BSS corresponding to the established R-TWT between the second AP and the associated STA.

In some embodiments, the Beacon frame may include a second TWT element, where the second TWT element is used for carrying the R-TWT information established between the second AP and the STA associated with the second AP.

Optionally, the second TWT element is further used for carrying information of at least one second BSS, such as BSSID or color information of the at least one second BSS, where the at least one second BSS is an interference BSS corresponding to the established R-TWT within the BSS to which the second AP belongs. That is, transmission within the at least one second BSS is capable of interfering with transmission during a R-TWT SP established between the second AP and the STA associated with the second AP.

In some embodiments, the format of the second TWT element may refer to the format of the first TWT element in the above embodiments, and the specific implementations refer to the related description of the above embodiments, which will not be repeated here for the sake of brevity.

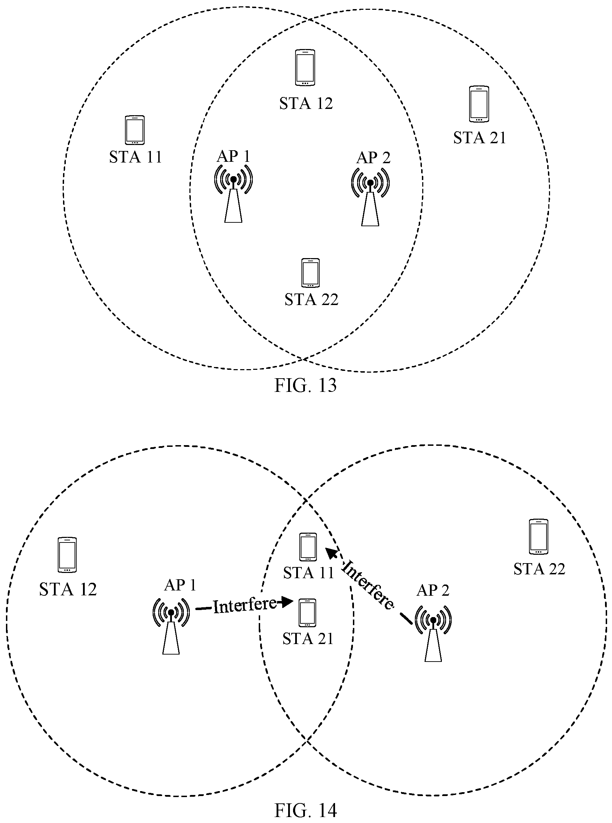

As an example illustrated with reference to FIG. 13, AP1 and AP2 may receive frames transmitted by each other, where R-TWTs have been established between AP2 and STA21 as well as between AP2 and STA22, respectively; AP2 may broadcast R-TWT information established between AP2 and STA21 and R-TWT information established between AP2 and STA22 through the Beacon frame; and AP1 may determine the R-TWT information established between AP2 and STA21 and the R-TWT information established between AP2 and STA22 by parsing the TWT element in the Beacon frame transmitted by AP2.

Manner 2: the pre-stored information is obtained from an STA associated with the first AP.

Optionally, when the associated STA of the first AP is within the OBSS, the associated STA of the first AP may receive frames transmitted by APs within other BSSs, each of the APs within other BSSs may broadcast the established R-TWT information within its respective BSS, and the first STA may obtain the established R-TWT information within other BSSs by receiving frames transmitted by the APs within other BSSs.

In some embodiments, the OBSS of the BSS to which the first STA belongs includes the at least one first BSS, and the STA may receive the established R-TWT information within the BSS to which the AP belongs broadcasted by the AP within the at least one first BSS. For example, the first STA may receive the Beacon frame transmitted by the AP within the first BSS, and obtain the established R-TWT information within the first BSS from the Beacon frame.

In some embodiments, the pre-stored information is obtained by the first AP from the associated STA of the first AP based on a request.

In other words, the associated STA of the first AP may report the established R-TWT information within the OBSS obtained by the associated STA to the first AP based on the request of the first AP.

For example, the first AP may request the first STA to report the established R-TWT information within the OBSS, and further, the first STA may report the established R-TWT information within the at least one first BSS obtained by the first STA to the first AP.

In some embodiments, the method 200 further includes that the first AP transmits a second request frame to the first STA, where the second request frame is used for requesting the first STA to report established R-TWT information within BSSs (i.e., OBSSs) to which other APs belong obtained by the first STA; and that the first AP receives a second response frame transmitted by the first STA, where the second response frame is used for reporting the established R-TWT information within the BSSs (i.e., the OBSSs) to which other APs belong obtained by the first STA.

In some embodiments, the established R-TWT information within other BSSs reported by the first STA may be obtained by the first STA from the APs within other BSSs during an R-TWT broadcast phase, for example, the established R-TWT information within other BSSs is obtained by the first STA by receiving Beacon frames transmitted by the APs within other BSSs. Optionally, the Beacon frames may further include interference BSS information corresponding to the established R-TWT within other BSSs. Optionally, the above information is carried in the TWT element in the Beacon frame. Therefore, when the first STA receives the Beacon frame transmitted by a non-associated AP and the Beacon frame includes the TWT element, the first STA may store information that is in the TWT element.

In some embodiments, the second response frame further includes interference BSS information corresponding to the established R-TWTs within other BSSs.

In some embodiments, other BSSs include a BSS to which a third AP belongs, and the second response frame includes a third TWT element, where the third TWT element is used for carrying R-TWT information established between the third AP and a STA associated with the third AP.

Optionally, the third TWT element is further used for carrying information of at least one third BSS, where transmission within the at least one third BSS is capable of interfering with transmission during an R-TWT SP between the third AP and the STA associated with the third AP.

That is, the at least one third BSS is an interference BSS of the STA associated with the third AP.

Optionally, in the second response frame, the interference BSS information corresponds to the R-TWT between the third AP and the STA associated with the third AP. For example, each of R-TWTs established between the third AP and different STAs may correspond to respective interference BSS information. Optionally, the respective interference BSS information corresponding to each of the R-TWTs established between the third AP and different STAs (or in other words, established between each group of the AP and STA) may be the same or different.

Therefore, since the first STA may receive the frames transmitted by other APs, the transmission between other APs and their associated STAs is capable of interfering with the transmission between the first STA and the first AP. Therefore, the first AP may store BSSID or color information of the BSSs to which other APs belong as well as the established R-TWT information between other APs and their associated STAs obtained by the associated STA.

In some embodiments, the second request frame is a Beacon Request frame, and the second response frame is a Beacon Response frame.

As an example illustrated with reference to FIG. 14, AP1 is associated with STA11 and STA12, respectively, and AP2 is associated with STA21 and STA22, respectively. It is assumed that R-TWTs have been established between STA21 and AP2 as well as between STA22and AP2, respectively; AP2 may broadcast R-TWT information established between AP2 and STA21 and R-TWT information established between AP2 and STA22 through the Beacon frame; and STA11 may receive the Beacon frame of AP2, to learn the established R-TWT information within the BSS to which AP2 belongs. AP1 transmits Beacon Request to STA11, to request STA11 to reply with Beacon Response frame. The Beacon Response includes the R-TWT information carried in the Beacon frame transmitted by AP2, and therefore, AP1 may learn the R-TWT information established between AP2 and STA21 and the R-TWT information established between AP2 and STA22 through the Beacon Response.

Manner 3: the pre-stored information is obtained by means of sharing.

In manner 3, APs may be grouped, and an AP in the same group may share established R-TWT information within a BSS to which the AP belongs with other APs in the same group, that is, one AP in the same group may learn established R-TWT information within BSSs to which other APs in the same group belong.

Optionally, a grouping of APs that share the R-TWT information is referred to as a multi-AP group. APs within the multi-AP group may be connected in a wired or wireless manner, to implement sharing of the R-TWT information.

Optionally, there may be a central AP in the multi-AP group or there may be no central AP in the multi-AP group. For example, in a case where there is a central AP, each AP obtains the established R-TWT information within the BSSs to which other APs belong through the central AP. In a case where there is no central AP, each AP may directly obtain the established R-TWT information within the BSSs to which other APs belong.

Optionally, interference BSS information corresponding to the established R-TWT, that is, which BSSs may interfere with the established R-TWT, may further be shared among APs in the multi-AP group.

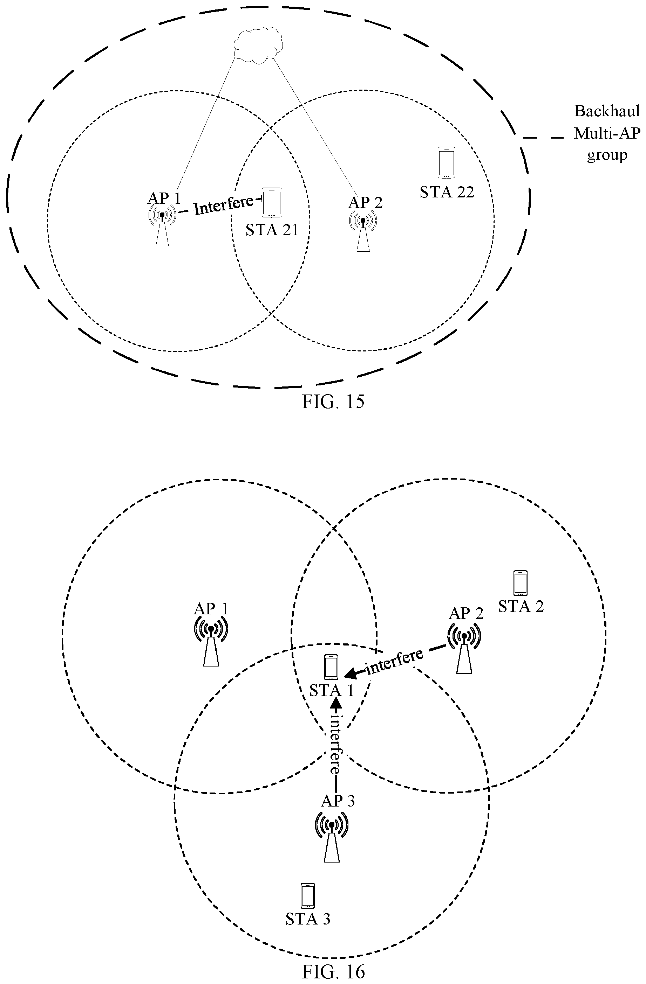

For example, as illustrated in FIG. 15, AP1 and AP2 belong to one multi-AP group. AP2 establishes R-TWTs with STA21 and STA22, respectively, and shares the R-TWT information with AP1. AP2 may further share interference BSS information of the established R-TWT with AP1, so that AP1 may determine whether the R-TWT established between AP2 and its associated STA may be interfered by AP1 according to the interference BSS information. For example, in the example of FIG. 15, the interference BSS information of the R-TWT established between AP2 and STA21 includes ID information or Color information of the BSS to which AP1 belongs, while the interference BSS information of the R-TWT established between AP2 and STA22 does not include ID information or Color information of the BSS to which AP1 belongs.

In some other embodiments of the present disclosure, the established R-TWT information within the at least one first BSS is obtained during an R-TWT establishment phase.

That is, when requesting the establishment of the R-TWT, the first STA indicates the interference BSS of the first STA and the established R-TWT information within the interference BSS to the first AP.

In some embodiments, the established R-TWT information within the at least one first BSS is carried in the first information, and the first information is transmitted through the first request frame. The carrying manner of the established R-TWT information within the at least one first BSS in the first request frame refers to the related description in Case 4, which will not be repeated here for the sake of brevity.

As illustrated in FIG. 16, AP1 is associated with STA1, AP2 is associated with STA2, AP3 is associated with STA3, and the dashed line represents the coverage range (or in other words, the BSS range) of each AP. As can be seen from FIG. 16, BSSs to which AP2 and AP3 belong are interference BSSs of STA1. It is assumed that AP2 has established an R-TWT with STA2 as well as AP3 has established an R-TWT with STA3.

When STA1 wants to establish an R-TWT with AP1, STA1 transmits a TWT Setup Request frame to AP1 to request establishment of the R-TWT. The TWT Setup Request frame includes a first TWT element and at least one OBSS R-TWT element, where the first TWT element is used for indicating R-TWT information requested to be established and interference BSS information, and the at least one OBSS R-TWT element is used for carrying established R-TWT information within the at least one interference BSS. The established R-TWT information in the interference BSS carried in the OBSS R-TWT element may be obtained by receiving Beacon frames broadcast by AP2 and AP3.

The establishment manners of the R-TWT according to the embodiments of the present disclosure are described below in conjunction with specific embodiments.

### Embodiment 1

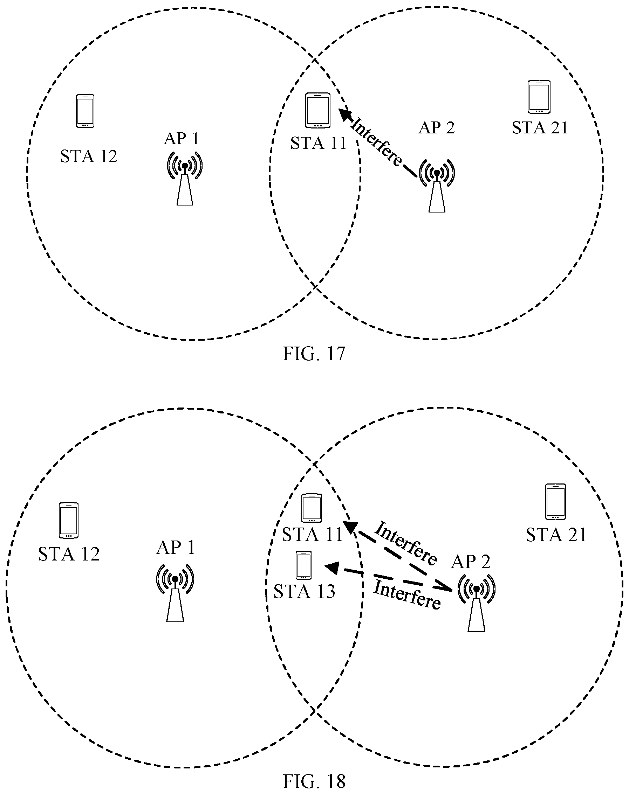

FIG. 17 is a schematic diagram of an application scenario of the embodiments of the present disclosure. In the application scenario illustrated in FIG. 17, STA11 and STA12 are associated with AP1, respectively, STA21 is associated with AP2, the dashed line in FIG. 17 represents the coverage range of each AP, and STA11 is within an OBSS and may be interfered by AP2. It is assumed that STA12 has established an R-TWT with AP1, AP1 may announce R-TWT information established between AP1 and STA12 through a TWT element included in a Beacon frame. It is assumed that STA21 has established an R-TWT with AP2, AP2 may announce R-TWT information established between AP2 and STA21 through a TWT element included in a Beacon frame.

Since STA11 is within the OBSS, STA11 will receive the Beacon frame transmitted by AP1 and the Beacon frame transmitted by AP2. The Beacon frame transmitted by AP1 includes the R-TWT information established between AP1 and STA12, and STA11 determines an interference BSS corresponding to the R-TWT established between AP1 and STA12 by parsing an Interference BSSID Info field of a Broadcast R-TWT Parameter Set field in the TWT element in the Beacon frame, where the interference BSS does not include the BSS to which AP2 belongs. Since STA11 is within the OBSS and may be subjected to interference from AP2, STA11 determines that STA11 cannot join to the established R-TWT between AP1 and STA12. STA11 may learn an interference BSS corresponding to the R-TWT established between AP2 and STA21 by parsing the TWT element in the beacon frame transmitted by AP2. Further, STA11 transmits a TWT Setup Request to the associated AP1, where the TWT Setup Request is used for requesting establishment of an R-TWT between STA11 and AP1.

In such example, R-TWT parameters requested by the TWT Setup Request need to avoid an R-TWT SP between AP2 and STA21 (e.g., STA11 needs to select parameters different from parameters of the R-TWT established between AP2 and STA21, to avoid conflict in time between an R-TWT SP between STA11 and AP1 and the R-TWT SP between AP2 and STA21).

In such example, the interference BSS indicated by the Interference BSSID Info field in the TWT element included in the TWT Setup Request is the BSS to which AP2 belongs. The value of the Interference BSSID Info Present field is set to 1, representing that the TWT element carries the Interference BSSID Info field.

Further, AP1 replies with an R-TWT Response frame to STA11 for representing that AP1 agrees with the setup request of STA11.

In some embodiments, if AP1 establishes an R-TWT with STA11 successfully, TWT information broadcast by AP1 in the Beacon frame includes the R-TWT information established between AP1 and STA11.

### Embodiment 2.

FIG. 18 is a schematic diagram of an application scenario of the embodiments of the present disclosure. In the application scenario illustrated in FIG. 18, STA11, STA12 and STA13 are associated with AP1, respectively, and STA21 is associated with AP2. It is assumed that STA12 has established an R-TWT with AP1, STA11 has established an R-TWT with AP1 according to the procedure described in Embodiment 1, and then AP1 may announce R-TWT information established between AP1 and STA11 and R-TWT information established between AP1 and STA12 through a TWT element included in a Beacon frame. It is assumed that STA21 has established R-TWT with AP2, and then AP2 may announce R-TWT information established between AP2 and STA21 through an R-TWT element included in a Beacon frame. The dashed line in FIG. 18 represents the coverage range of each AP or service of each BSS. STA13 is within an OBSS and may be subjected to interference from AP2.

Since STA13 is within the OBSS, STA13 will receive the Beacon frame transmitted by AP1 and the Beacon frame transmitted by AP2. The Beacon frame transmitted by AP1 includes the R-TWT information established between AP1 and STA11 and the R-TWT information established between AP1 and STA12, and STA13 determines an interference BSS corresponding to the R-TWT established between AP1 and STA11 by parsing an Interference BSSID Info field of a Broadcast R-TWT Parameter Set field in the TWT element in the Beacon frame, where the Interference BSS includes the BSS to which AP2 belongs. Since STA13 is within the OBSS and may be subjected to interference from AP2, that is, the interference BSS of STA11 is the same as that of STA13, STA13 determines STA13 can join to the R-TWT established between AP1 and STA11. STA13 may determine the interference BSS of STA21 by parsing the Interference BSSID Info field of the Broadcast R-TWT Parameter Set field in the TWT element in the Beacon frame transmitted by AP2.

Further, STA13 transmits a TWT Setup Request to the associated AP1, where the TWT Setup Request is used for requesting establishment of an R-TWT between STA13 and AP1. Since the interference BSS of STA11 is the same as that of STA12, STA13 may initiate the setup request of the R-TWT by using the R-TWT information established between AP1 and STA11. That is, R-TWT parameters carried by STA13 in the TWT Setup Request may be the same as R-TWT parameters carried in the TWT Setup Request transmitted by STA11.

In such example, the interference BSS indicated by the Interference BSSID Info field in the TWT element included in the TWT Setup Request transmitted by STA13 is the BSS to which AP2 belongs. The value of the Interference BSSID Info Present field is set to 1, representing that the TWT element carries the Interference BSSID Info field.

Further, AP1 replies with an R-TWT Response frame to STA13 for representing that AP1 agrees with the setup request of STA13.

In some embodiments, if AP1 establishes an R-TWT with STA13 successfully, TWT information broadcast by AP1 in the Beacon frame includes the R-TWT information established between AP1 and STA13.

### Embodiment 3.

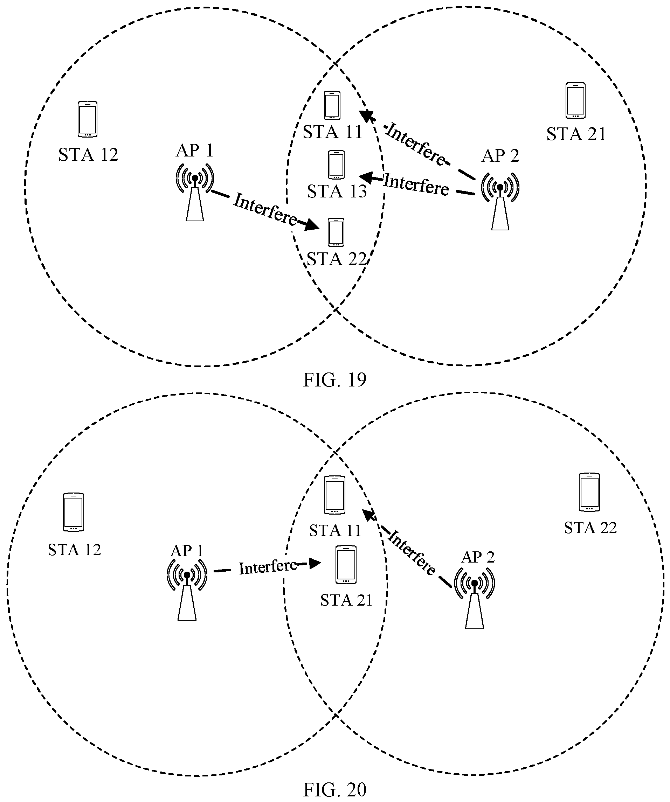

FIG. 19 is a schematic diagram of an application scenario of the embodiments of the present disclosure. In the application scenario illustrated in FIG. 19, STA11, STA12 and STA13 are associated with AP1, respectively, and STA21 and STA22 are associated with AP2, respectively. It is assumed that STA12 has established an R-TWT with AP1, STA11 has established an R-TWT with AP1 according to the procedure described in Embodiment 1, STA13 has established an R-TWT with AP1 according to the procedure described in Embodiment 2, and STA21 has established an R-TWT with AP2. The dashed line in FIG. 19 represents the coverage range of each AP or service of each BSS. STA22 may be subjected to interference from AP1, that is, the interference BSS of STA22 includes the BSS to which AP1 belongs.

Similar to Embodiment 2, STA22 may learn the established R-TWT information within the BSS to which STA22 belongs and corresponding interference BSS information by parsing Beacon frames of AP1 and AP2. In the example of FIG. 19, the interference BSS of STA21 does not include the BSS to which AP1 belongs, while the interference BSS of STA22 includes the BSS to which AP1 belongs. Therefore, STA22 may determine that STA22 cannot join to the R-TWT established between STA21 and AP2.

Further, STA22 transmits a TWT Setup Request to the associated AP2, where the TWT Setup Request is used for requesting establishment of an R-TWT between STA22 and AP2.

In such example, the interference BSS indicated by the Interference BSSID Info field in the TWT element included in the TWT Setup Request transmitted by STA22 is the BSS to which AP1 belongs. The value of the Interference BSSID Info Present field is set to 1, representing that the TWT element carries the Interference BSSID Info field.

Further, AP2 replies with an R-TWT response frame to STA22 for representing that AP2 agrees with the setup request of STA22.

In some embodiments, if AP2 establishes an R-TWT with STA22 successfully, TWT information broadcast by AP2 in the Beacon frame includes the R-TWT information established between AP2 and STA22.

In some embodiments, the first AP may be silent according to the source of interference or the environment to which the first AP belongs.

In some embodiments, the first AP may follow at least one of following silence rules:
the first AP maintaining silence during an R-TWT SP indicated by established R-TWT information within a first BSS set, where BSSs within the first BSS set and the BSS to which the first AP belongs are OBSSs; or
the first AP maintaining silence during an R-TWT SP indicated by first R-TWT information, where interference BSSs corresponding to the first R-TWT information include the BSS to which the first AP belongs.

In some embodiments, the first BSS set is a set of BSSs to which APs from which the first AP receives beacon frames belong, and the beacon frame includes established R-TWT information within the BSSs.

In some embodiments, the R-TWT determined according to the R-TWT information obtained based on the above manner 1 is denoted as a first type of R-TWT, and the R-TWT determined according to the R-TWT information obtained based on the above manner 2 or manner 3 is denoted as a second type of R-TWT.

The first AP maintains silence during the SP of the first type of R-TWT. If the first AP holds a TXOP, the first AP needs to end the TXOP before the start of the SP of the first type of R-TWT.

If the interference BSS corresponding to the second type of R-TWT includes the BSS to which the first AP belongs, the first AP maintains silence during the SP of the second type of R-TWT. If the first AP holds a TXOP, the first AP needs to end the TXOP before the start of the SP of the second type of R-TWT.

In some scenarios, the first AP may receive the frame transmitted by the neighboring AP, that is, the neighboring AP may also receive the frame transmitted by the first AP, and therefore, transmission between the first AP and its associated STA may interfere with transmission between the neighboring AP and its associated STA. In this case, the first AP may maintain silence during the established R-TWT SP within the BSS in which the neighboring AP belongs.

In other scenarios, the first AP is unable to receive the frame from the neighboring AP. In this case, the first AP may obtain established R-TWT information within one or more BSSs and corresponding interference BSS information by the above manner 2. If interference BSSs corresponding to a certain R-TWT include the BSS to which the first AP belongs, the first AP may maintain silence during an SP of the certain R-TWT.

In some other scenarios, the first AP obtains R-TWT information of other APs and corresponding interference BSS information by the multi-AP group manner. If interference BSSs corresponding to a certain R-TWT include the BSS to which the first AP belongs, the first AP may maintain silence during an SP of the certain R-TWT.

In some embodiments, the first STA may be silent according to the source of interference or the environment to which the first AP belongs.

In some embodiments, the first STA may follow following the silence rule:
the first STA maintaining silence during all R-TWT SPs indicated by established R-TWT information within a second BSS set other than the R-TWT SP established between the first STA and the first AP, where the second BSS set is a set of BSSs to which access point devices from which the first station device receives beacon frames belong.

It may be understood that the first STA may receive the beacon frames transmitted by the APs which are within the BSSs in the second BSS set, which represents that the first STA is within the OBSS. Therefore, transmission between the first STA and the first AP may interfere with transmission within the BSSs in the second BSS set. Therefore, the first STA needs to maintain silence during an R-TWT SP indicated by the established R-TWT information within the second BSS set.

Silence manners of the AP and the STA according to the embodiments of the present disclosure are described below in conjunction with the specific example in FIG. 20.

In the example of FIG. 20, AP1 is associated with STA11 and STA12, respectively, and AP2 is associated with STA21 and STA22, respectively. AP1 establishes an R-TWT with STA11 and an R-TWT with STA12, respectively, and AP2 establishes an R-TWT with STA21 and an R-TWT with STA22 respectively.

The interference BSS of STA11 includes the BSS to which AP2 belongs, the interference BSS of STA21 includes the BSS to which API belongs, the interference BSS of STA12 does not include the BSS to which AP2 belongs, and the interference BSS of STA22 does not include the BSS to which AP1 belongs.

Therefore, STA11 needs to maintain silence during the R-TWT SP established between AP2 and STA21, the R-TWT SP established between AP2 and STA22, and the R-TWT SP established between AP1 and STA12.

STA12 needs to maintain silence during the R-TWT SP established between AP1 and STA11.

STA21 needs to maintain silence during the R-TWT SP established between AP1 and STA11, the R-TWT SP established between AP1 and STA12 and the R-TWT SP established between AP2 and STA22.

STA22 needs to maintain silence during the R-TWT SP established between AP2 and STA21.

AP1 needs to maintain silence during the R-TWT SP established between AP2 and STA21.

AP2 needs to maintain silence during the R-TWT SP established between AP1 and STA11.

In the example of FIG. 13, AP1 is within the OBSS, and then AP1 needs to maintain silence during the R-TWT SPs established between AP2 and its associated STAs. Further, AP2 is within the OBSS, and then AP2 needs to maintain silence during the R-TWT SPs established between AP1 and its associated STAs.

In the example of FIG. 14, AP1 may learn that the R-TWT established between AP2 and STA21 may be subjected to interference from AP1 (i.e., the interference BSS information includes ID information or color information of the BSS to which AP1 belongs) by the Beacon Response frame transmitted by STA11, while the R-TWT established between AP2 and STA22 will not be subjected to interference from AP1 (i.e., the interference BSS information does not include the ID information or color information of the BSS to which AP1 belongs). Therefore, AP1 needs to maintain silence during the R-TWT SP established between AP2 and STA21.

In the example of FIG. 15, AP1 may learn that the R-TWT established between AP2 and STA21 may be subjected to interference from AP1, by means of sharing, while the R-TWT established between AP2 and STA22 will not be subjected to interference from AP1. Therefore, AP1 needs to maintain silence during the R-TWT SP established between AP2 and STA21.

In some embodiments of the present disclosure, the first AP may establish the R-TWT between the first AP and its associated STA according to environment to which the STA belongs (e.g., suffered interference, such as interference BSS information). For example, for the STAs with the same interference BSS, the first AP may establish the same R-TWT, that is, adopt the same R-TWT parameter. For the STAs with different interference BSSs, the first AP may establish different R-TWTs, that is, adopt different R-TWT parameters. Therefore, in the embodiments of the present disclosure, R-TWTs may be grouped according to the source of interference, each group of R-TWTs corresponds to a respective interference BSS, and different groups of R-TWTs correspond to different interference BSSs.

In some embodiments, the first request frame includes interference BSS information corresponding to the first STA used for requesting the first AP to establish an R-TWT for the interference BSS information. For example, the first AP may establish different R-TWTs for different interference BSSs, and establish the same R-TWT for the same interference BSS. If there are multiple STAs having the same interference BSS, the multiple STAs may adopt the same R-TWT. In this way, it is unnecessary to establish different R-TWTs for each STA, which avoids the problem that data cannot be not transmitted in time caused by the need for other STAs to back off during the R-TWT SP, thereby improving the grouping benefit of R-TWT.

That is, in the embodiments of the present disclosure, the first AP may perform the establishment of the R-TWT according to the source of interference, and further the first AP and the first STA may back off according to the source of interference without backing off during each R-TWT SP, which is beneficial for improving the grouping benefit of R-TWT.

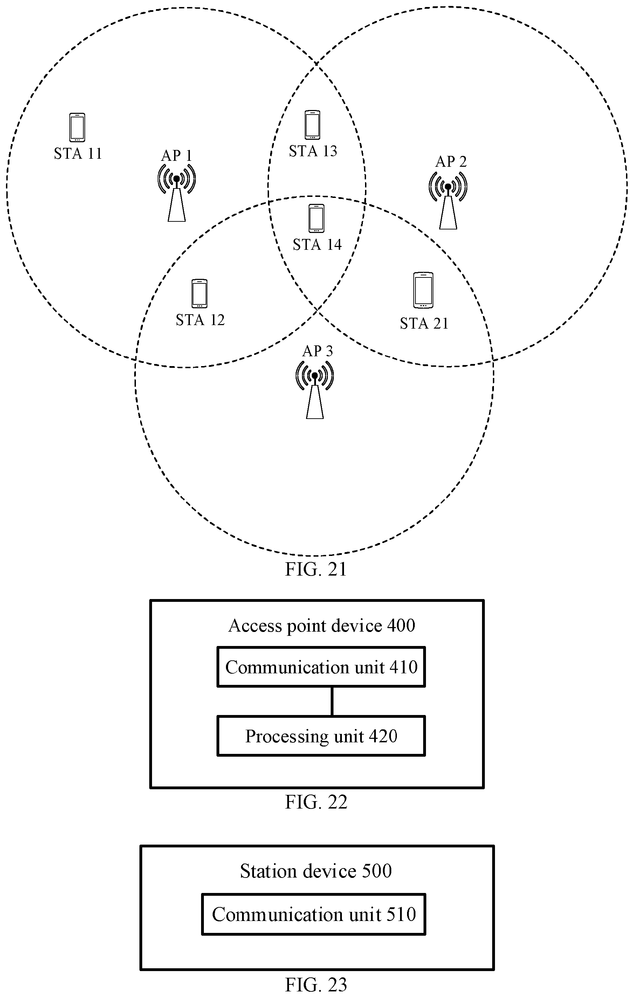

As illustrated in FIG. 21, AP1 is associated with STA11, STA12, STA13 and STA14, respectively, and AP2 is associated with STA21. STA11 is not subjected to interference from other BSSs, STA12 is subjected to interference by the BSS to which AP3 belongs, STA13 is subjected to interference by the BSS to which AP2 belongs, STA14 is subjected to interference by the BSSs to which AP2 and AP3 belong, and STA21 is subjected to interference by the BSS to which AP3 belongs.

Since interference environments are different, AP1 needs to establish different R-TWTs for STA11, STA12, STA13, and STA14, respectively. AP2 establishes an R-TWT for STA21, and the R-TWT SP between AP2 and STA21 does not conflict in time with the R-TWT SP between AP1 and STA13 and also not conflict in time with the R-TWT SP between AP1 and STA14 in time, but may overlap with the R-TWT SP between AP1 and STA11 and also overlap with the R-TWT SP between AP1 and STA12.

It is assumed that the duration of the R-TWT SP between AP1 and its corresponding associated STA, the duration of the R-TWT SP between AP2 and its corresponding associated STA and the duration of the R-TWT SP between AP3 and its corresponding associated STA are the same, and the duration is t, where t may be the duration required for each STA to complete the transmission of latency sensitive traffic.

In a case of performing grouping silence without depending on the source of interference, if only one R-TWT is established between AP1 and STA11, between AP1 and STA12, between AP1 and STA13, and between AP1 and STA14, respectively, the total duration required for completing the transmission of latency sensitive traffic is 4t. In order not to affect the transmission of latency sensitive traffic between AP1 and STA11, between AP1 and STA12, between AP1 and STA13, and between AP1 and STA14, AP2 and AP3 need to maintain silence during the above R-TWT SPs, and each of AP2 and AP3 has a silence duration of 4t.

In a case of performing grouping silence depending on the source of interference, AP2 only needs to maintain silence when the latency sensitive traffic is transmitted during the R-TWT SP between AP1 and STA13 and the R-TWT SP between AP1 and STA14, and the total silence duration is 2t; however, when the latency sensitive traffic is transmitted during the R-TWT SP between AP1 and STA11 and the R-TWT SP between AP1 and STA12, since STA11 and STA12 are not within the BSS to which AP2 belongs, AP2 may still compete for the channel normally, and therefore, the total silence duration of AP2 is 2t.

Similarly, AP3 only needs to maintain silence when the latency sensitive traffic is transmitted during the R-TWT SP between AP1 and STA12 and the R-TWT SP between AP1 and STA14, and therefore, the total silence duration of AP3 is 2t.

Therefore, the R-TWT grouping manner and silence manner according to the interference sources based on the embodiments of the present disclosure are beneficial for reducing the silence duration of the device, thereby ensuring that the latency sensitive traffic is transmitted timely.

In summary, in the embodiments of the present disclosure, the station device may report the interference BSS information (i.e., OBSS information) of the station device to the access point device; and furthermore, the access point device may establish the R-TWT between the station device and the access point device according to the established R-TWT within the interference BSS. In this way, it is beneficial for reducing the interference of the established R-TWT within the interference BSS to the transmission within the R-TWT between the station device and the access point device. For example, the R-TWT established between the access point device and the station device avoids the established R-TWT within the interference BSS.

In some implementations, the established R-TWT information within the interference BSS may be transmitted by the station device to the access point device when requesting the establishment of the R-TWT.

In some other implementations, the established R-TWT information within the interference BSS may be obtained by the access point device from the neighboring access point device. For example, the neighboring access point device may broadcast the established R-TWT information within the BSS to which the neighboring access point device belongs, and the access point device may receive and store the information. The station device may instruct the ID information or color information of the interference BSS to the access point device when requesting the establishment of the R-TWT, and the access point device obtains the established R-TWT information within the interference BSS from the stored information.

In some further implementations, the established R-TWT information within the interference BSS may be obtained by the access point device from the associated station device. For example, the neighboring access point device may broadcast the established R-TWT information within the BSS to which the neighboring access point device belongs, and the associated station device may receive and store the information. When the access point device requests the information, the station device may report the information to the access point device, and the access point device may store the information. Furthermore, the station device may instruct the ID information or color information of the interference BSS to the access point device when requesting the establishment of the R-TWT, and the access point device obtains the established R-TWT information within the interference BSS from the stored information.

In some further implementations, the established R-TWT information within the interference BSS may be obtained by means of multiple AP group sharing.

Further, the access point device and the station device may perform silence according to the environment where the access point device and the station device are located or the interference BSS.

For example, other than the R-TWT established between the STA and the AP, the STA maintains silence during the all R-TWT SPs indicated in the TWT elements included in received Beacon frames.

For example, the AP maintains silence during the R-TWT SPs indicated in the TWT elements included in the received Beacons frame from the neighboring APs.

For example, the AP obtains the Beacon frame transmitted by the neighboring AP through a Beacon Request and Response. If the BSSID field of the TWT element in the Beacon frame includes the BSSID of the BSS to which the AP belongs (or the BSS Color field includes Color information of the BSS to which the AP belongs), the AP maintains silence during the R-TWT SP indicated by the TWT element.

For example, the AP shares the established R-TWT information within the BSSs to which other APs belong and their corresponding interference BSS information by joining the multi-AP group. If interference BSS of the R-TWT information includes the BSS to which the AP belongs, the AP maintains silence during the R-TWT SP indicated by the R-TWT information.

In conjunction with FIG. 9 to FIG. 21, the method embodiments of the present disclosure are described in detail above, and the apparatus embodiments of the present disclosure will be described in detail below in conjunction with FIG. 21 to FIG. 26. It should be understood that the apparatus embodiments and the method embodiments correspond to each other, and similar descriptions may refer to the method embodiments.

FIG. 22 illustrates a schematic block diagram of an access point device 400 according to the embodiments of the present disclosure. As illustrated in FIG. 22, the access point device 400 includes a communication unit 410 and a processing unit 420.

The communication unit 410 is configured to receive first information transmitted by a first station device, where the first information is used for indicating information of at least one first basic service set (BSS), transmission within the at least one first BSS is capable of interfering with transmission during a restricted target wake time (R-TWT) service period (SP) established between the first station device and the access point device, and the at least one first BSS is an overlapping basic service set (OBSS) of a BSS to which the access point device and the first station device belong.

The processing unit 420 is configured to establish an R-TWT between the access point device and the first station device according to the first information.

In some embodiments, the first information includes at least one of:
identify (ID) information of the at least one first BSS or color information of the at least one first BSS;
established R-TWT information within the at least one first BSS; or
received strength information of signal transmitted by the first station device to an access point device within the at least one first BSS.

In some embodiments, the first information is carried in a first request frame, and the first request frame is used for requesting establishment of the R-TWT between the first station device and the first access point device.

In some embodiments, the first request frame includes a first target wake time (TWT) element, and the first information is carried in the first TWT element.

In some embodiments, the first TWT element includes an OBSS Info List field, and an OBSS Info field is used for indicating the at least one first BSS.

In some embodiments, the OBSS Info List field includes a basic service set identifier (BSSID) Size field and/or at least one BSSID field, the BSSID Size field is used for indicating a number of BSSID fields included in the OBSS Info field, and the at least one BSSID field is used for indicating ID information of the at least one first BSS.

In some embodiments, the OBSS Info List field includes a BSS Color Size field and/or at least one BSS Color field, the BSS Color Size field is used for indicating a number of BSS Color fields included in the OBSS Info field, and the at least one BSS Color field is used for indicating color information of the at least one first BSS.

In some embodiments, the first TWT element includes an OBSS Info List field, and an OBSS List field is used for indicating the at least one first BSS and received strength information of signal transmitted by the first station device to an access point device within the at least one first BSS.

In some embodiments, the OBSS Info List field includes an OBSS Info Size field and/or at least one OBSS Info field, the OBSS Info Size field is used for indicating a number of OBSS Info fields included in the OBSS Info field, and the at least one OBSS Info field is used for indicating ID information or color information of the at least one first BSS and the received strength information of signal transmitted by the first station device to the access point device within the at least one first BSS.

In some embodiments, the first request frame further includes an OBSS Info List Present field for indicating whether the first request frame includes an OBSS Info List field.

In some embodiments, the first request frame includes a Broadcast TWT Info field, and the Broadcast TWT Info field includes the OBSS Info List Present field.

In some embodiments, the first request frame further includes at least one OBSS R-TWT element for carrying established R-TWT information within the at least one first BSS, and each OBSS R-TWT element is used for carrying established R-TWT information within one first BSS.

In some embodiments, the first request frame further includes R-TWT information requested by the first station device, and there is no overlap in time between an R-TWT requested by the first station device and an R-TWT within the at least one first BSS.

In some embodiments, the processing unit 420 is further configured to obtain established R-TWT information within the at least one first BSS according to the first information.

In some embodiments, the established R-TWT information within the at least one first BSS is obtained by the access point device from an access point device within the at least one first BSS.

In some embodiments, the established R-TWT information within the at least one first BSS is obtained by the access point device from a beacon frame transmitted by the access point device within the at least one first BSS.

In some embodiments, the at least one first BSS includes a BSS to which a second access point device belongs, and a beacon frame transmitted by the second access point device includes R-TWT information established between the second access point device and a station device associated with the second access point device.

In some embodiments, the beacon frame includes a second TWT element, and the second TWT element is used for carrying the R-TWT information established between the second access point device and the station device associated with the second access point device.

In some embodiments, the second TWT element is further used for carrying information of at least one second BSS, transmission within the at least one second BSS is capable of interfering with transmission during a R-TWT SP established between the second access point device and the station device associated with the second access point device, and the at least one second BSS is an OBSS of the BSS to which the second access point device belongs.

In some embodiments, the established R-TWT information within the at least one first BSS is obtained by the access point device from a station device associated with the first access point device.

In some embodiments, the communication unit 410 is further configured to transmit a second request frame to the station device associated with the access point device, where the second request frame is used for requesting the station device to report R-TWT information within an OBSS of a BSS to which the station device belongs, in which the R-TWT information is obtained by the station device; and
receive a second response frame transmitted by the station device associated with the access point device, where the second response frame is used for reporting the R-TWT information within the OBSS of the BSS to which the station device belongs, in which the R-TWT information is obtained by the station device.

In some embodiments, the second request frame is a beacon request frame, and the second response frame is a beacon response frame.

In some embodiments, the OBSS of the BSS to which the station device belongs includes a BSS to which a third access point device belongs, the second response frame includes a third TWT element, and the third TWT element is used for carrying R-TWT information established between the third access point device and a station device associated with the third access point device.

In some embodiments, the third TWT element is further used for carrying information of at least one third BSS, and transmission within the at least one third BSS is capable of interfering with transmission during a R-TWT SP established between the third access point device and the station device associated with the third access point device.

In some embodiments, an access point device within the at least one first BSS and the access point device belong to a same group, and the access point devices within the same group share established R-TWT information within BSSs to which the access point devices belong.

In some embodiments, the communication unit 410 is further configured to transmit a first response frame to the first station device, where the first response frame is a response frame of the first request frame, the first response frame includes target R-TWT information, and there is no overlap in time between an R-TWT determined according to the target R-TWT information and an R-TWT within the at least one first BSS.

In some embodiments, the communication unit 410 is further configured to maintain silence during an R-TWT SP indicated by established R-TWT information within a first BSS set, where BSSs within the first BSS set and the BSS to which the access point device belongs are OBSSs.

In some embodiments, the first BSS set is a set of BSSs to which access point devices from which the access point device receives beacon frames belong, and the beacon frame includes established R-TWT information within the BSSs.

In some embodiments, the communication unit 410 is further configured to maintain silence during an R-TWT SP indicated by first R-TWT information, where the first R-TWT information is established R-TWT information within a fourth BSS, and an OBSS of the fourth BSS includes the BSS to which the access point device belongs.

In some embodiments, responsive to that OBSS information reported by a second station device to the first access point device is the same as that reported by the first station device to the first access point device, R-TWT information established between the first access point device and the first station device is the same as R-TWT information established between the first access point device and the second station device.

In some embodiments, the processing unit 420 is further configured to parse the Beacon frame, to obtain BSSID information of a neighboring AP and established R-TWT information carried in the TWT element in the Beacon frame.

Optionally, the Beacon frame may be received by the access point device 400 from a neighboring access point device.

Optionally, the Beacon frame may be received by the first station device from the neighboring access point device, and reported to the access point device 400 through interaction between a Beacon Request frame and a Beacon Response frame.

In some embodiments, the access point device 400 further includes a storage unit, configured to store at least one of following information:
a first type of R-TWT information;
BSSID or color information corresponding to the first type of R-TWT information;
interference BSS information corresponding to the first type of R-TWT information;
a second type of R-TWT information;
BSSID or color information corresponding to the second type of R-TWT information; or
interference BSS information corresponding to the second type of R-TWT information.

In some embodiments, transmission within the first type of R-TWT may be subjected to interference from transmission of the access point device, and transmission within the second type of R-TWT may interfere with the transmission of the access point device.

In some embodiments, at least one of the first type of R-TWT information, the corresponding BSSID or color information or the corresponding interference BSS information is obtained by the access point device from a Beacon frame transmitted by a neighboring access point device.

In some embodiments, at least one of the second type of R-TWT information, the corresponding BSSID or color information or the corresponding interference BSS information is obtained by the access point device from an associated station device, and the associated station device obtains at least one of the second type of R-TWT information, the corresponding BSSID or color information or the corresponding interference BSS information from a neighboring access point device.

Optionally, in some embodiments, the communication unit may be a communication interface or a transceiver, or an input/output interface of a communication chip or a system on chip. The processing unit mentioned above may be one or more processors.

It should be understood that the access point device 400 according to the embodiment of the present disclosure may correspond to the first access point device in the method embodiments of the present disclosure, and the above and other operations and/or functions of each unit in the access point device 400 are respectively for implementing the corresponding processes of the first access point device in the method 200 illustrated in FIG. 9 to FIG. 21, which will not be repeated here for the sake of brevity.

FIG. 23 is a schematic block diagram of a station device according to the embodiments of the present disclosure. The station device 500 of FIG. 23 includes a communication unit 510.

The communication unit 510 is configured to transmit first information to a first access point device, where the first information is used for indicating information of at least one first basic service set (BSS), transmission within the at least one first BSS is capable of interfering with transmission during a restricted target wake time (R-TWT) service period (SP) established between the first station device and the first access point device, and the at least one first BSS is an overlapping basic service set (OBSS) of a BSS to which the first access point device and the first station device belong.

In some embodiments, the first information includes at least one of:
identify (ID) information of the at least one first BSS or color information of the at least one first BSS;
established R-TWT information within the at least one first BSS; or
received strength information of signal transmitted by the station device to an access point device within the at least one first BSS.

In some embodiments, the first information is carried in a first request frame, and the first request frame is used for requesting establishment of an R-TWT between the station device and the first access point device.

In some embodiments, the first request frame includes a first target wake time (TWT) element, and the first information is carried in the first TWT element.

In some embodiments, the first TWT element includes an OBSS Info List field, and an OBSS Info field is used for indicating the at least one first BSS.

In some embodiments, the OBSS Info List field includes a basic service set identifier (BSSID) Size field and/or at least one BSSID field, the BSSID Size field is used for indicating a number of BSSID fields included in the OBSS Info field, and the at least one BSSID field is used for indicating ID information of the at least one first BSS.

In some embodiments, the OBSS Info List field includes a basic service set identifier (BSSID) Size field and/or at least one BSSID field, the BSSID Size field is used for indicating a number of BSSID fields included in the OBSS Info field, and the at least one BSSID field is used for indicating ID information of the at least one first BSS.

In some embodiments, the first TWT element includes an OBSS Info List field, and an OBSS List field is used for indicating the at least one first BSS and received strength information of signal transmitted by the station device to an access point device within the at least one first BSS.

In some embodiments, the OBSS Info List field includes an OBSS Info Size field and/or at least one OBSS Info field, the OBSS Info Size field is used for indicating a number of OBSS Info fields included in the OBSS info field, and the at least one OBSS Info field is used for indicating ID information or color information of the at least one first BSS and the received strength information of signal transmitted by the station device to the access point device within the at least one first BSS.

In some embodiments, the first request frame further includes an OBSS Info List Present field for indicating whether the first request frame includes an OBSS Info List field.

In some embodiments, the first request frame includes a Broadcast TWT Info field, and the Broadcast TWT Info field includes the OBSS Info List Present field.

In some embodiments, the first request frame further includes at least one OBSS R-TWT element for carrying established R-TWT information within the at least one first BSS, and each OBSS R-TWT element is used for carrying established R-TWT information within one first BSS.

In some embodiments, the first request frame further includes R-TWT information requested by the station device, and there is no overlap in time between an R-TWT requested by the station device and an R-TWT within the at least one first BSS.

In some embodiments, the communication unit 510 is further configured to transmit second information to the first access point device, where the second information includes established R-TWT information within the at least one first BSS.

In some embodiments, the established R-TWT information within the at least one first BSS is obtained by the station device from an access point device within the at least one first BSS.

In some embodiments, the established R-TWT information within the at least one first BSS is obtained by the station device from a beacon frame transmitted by the access point device within the at least one first BSS.

In some embodiments, the at least one first BSS includes a BSS to which a third access point device belongs, and a beacon frame transmitted by the third access point device includes R-TWT information established between the third access point device and a station device associated with the third access point device.

In some embodiments, the beacon frame includes a third TWT element, and the third TWT element is used for carrying the R-TWT information established between the third access point device and the station device associated with the third access point device.

In some embodiments, the third TWT element is further used for carrying information of at least one third BSS, and transmission within the at least one third BSS is capable of interfering with transmission during a R-TWT SP established between the third access point device and the station device associated with the third access point device.

In some embodiments, the second information is transmitted through a beacon response frame.

In some embodiments, the communication unit 510 is further configured to receive a first response frame transmitted by the first access point device, where the first response frame is a response frame of the first request frame, and the first response frame includes target R-TWT information, and there is no overlap in time between an R-TWT determined according to the target R-TWT information and an R-TWT within the at least one first BSS.

In some embodiments, the communication unit 510 is further configured to silence during all R-TWT SPs indicated by established R-TWT information within a second BSS set other than the R-TWT SP established between the first station device and the first access point device, where the second BSS set is a set of BSSs to which access point devices from which the station device receives beacon frames belongs.

In some embodiments, the station device 500 further includes a processing unit, configured to parse a received beacon frame to obtain BSSID information of a transmitter of the beacon frame, and established R-TWT information within a BSS identified by the BSSID information.

In some embodiments, the station device 500 further includes a storage unit, configured to store BSSID information of a non-associated access point device and established R-TWT information within a beacon frame (i.e., OBSS R-TWT information), in a case where the beacon frame transmitted by the non-associated access point device is received.

In some embodiments, the processing unit is further configured to determine time parameters (such as a start time, duration or period) of the R-TWT requested to be established between the station device and the first access point device according to the stored OBSS R-TWT information, to avoid conflicting with an OBSS R-TWT SP.

In some embodiments, the communication unit 510 is further configured to maintain silence during the OBSS R-TWT SP and during other R-TWT SPs within the BSS to which the station device belongs other than the R-TWT SP established between the station device and the first access point device. If the station device holds a TXOP, the station device needs to end the TXOP before the start of the R-TWT SP.

Optionally, in some embodiments, the communication unit may be a communication interface or a transceiver, or an input/output interface of a communication chip or a system on chip. The processing unit may be one or more processors.

It should be understood that the station device 500 according to the embodiments of the present disclosure may correspond to the first station device in the method embodiments of the present disclosure, and the above and other operations and/or functions of each unit in the station device 500 are respectively for implementing the corresponding processes of the first station device in the method 200 shown in FIGS. 9 to 21, which will not be repeated here for the sake of brevity.

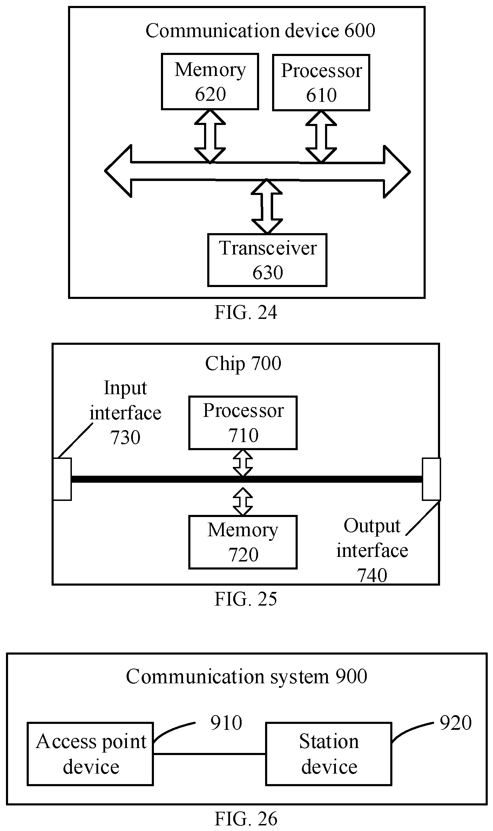

FIG. 24 is a schematic structural diagram of a communication device 600 provided in the embodiments of the present disclosure. The communication device 600 illustrated in FIG. 24 includes a processor 610, and the processor 610 may call a computer program from a memory and run the computer program to implement the methods in the embodiments of the present disclosure.

Optionally, as illustrated in FIG. 6, the communication device 600 may further include a memory 620. The processor 610 may call a computer program from the memory 620 and run the computer program to implement the methods in the embodiments of the present disclosure.

The memory 620 may be a separate device independent from the processor 610, or may be integrated into the processor 610.

Optionally, as illustrated in FIG. 6, the communication device 600 may further include a transceiver 630, and the processor 610 may control the transceiver 630 to communicate with other devices, specifically, may transmit information or data to other devices, or receive information or data transmitted by other devices.

The transceiver 630 may include a transmitter and a receiver. The transceiver 630 may further include antenna(s), and the number of the antenna(s) may be one or more.

Optionally, the communication device 600 may specifically be the first access point device in the embodiments of the present disclosure, and the communication device 600 may implement corresponding processes implemented by the first access point device in each method in the embodiments of the present disclosure, which will not be repeated here for the sake of brevity.

Optionally, the communication device 600 may specifically be the first station device of the embodiments of the present disclosure, and the communication device 600 may implement the corresponding processes implemented by the first station device in each method of the embodiments of the present disclosure, which will not be repeated here for the sake of brevity.

FIG. 25 is a schematic structural diagram of a chip in the embodiments of the present disclosure. The chip 700 illustrated in FIG. 25 includes a processor 710, and the processor 710 may call a computer program from a memory and run the computer program to implement the methods of the embodiments of the present disclosure.

Optionally, as illustrated in FIG. 7, the chip 700 may further include a memory 720. The processor 710 may call a computer program from the memory 720 and run the computer program to implement the methods in the embodiments of the present disclosure.

The memory 720 may be a separate device independent from the processor 710, or may be integrated into the processor 710.

Optionally, the chip 700 may further include an input interface 730. The processor 710 may control the input interface 730 to communicate with other devices or chips, and specifically, may obtain information or data transmitted by other devices or chips.

Optionally, the chip 700 may further include an output interface 740. The processor 710 may control the output interface 740 to communicate with other devices or chips, and specifically, may output information or data to other devices or chips.

Optionally, the chip may be applied to the first access point device in the embodiments of the present disclosure, and the chip may implement the corresponding processes implemented by the first access point device in each method in the embodiments of the present disclosure, which will not be repeated here for the sake of brevity.

Optionally, the chip may be applied to the first station device in the embodiments of the present disclosure, and the chip may implement the corresponding processes implemented by the first station device in each method of the embodiments of the present disclosure, which will not be repeated here for the sake of brevity.

It should be understood that the chip mentioned in the embodiments of the present disclosure may also be called a system-level chip, a system chip, a chip system or a system-on-chip chip, or the like.

FIG. 26 is a schematic block diagram of a communication system 900 provided in the embodiments of the present disclosure. As illustrated in FIG. 26, the communication system 900 includes an access point device 910 and a station device 920.

The access point device 910 may be configured to implement the corresponding functions implemented by the first access point device in the above methods, and the station device 920 may be configured to implement the corresponding functions implemented by the first station device in the above methods, which will not be repeated here for the sake of brevity.

It should be understood that the processor in the embodiments of the present disclosure may be an integrated circuit chip with signal processing capabilities. In the implementation process, each step in the above method embodiments may be completed by an integrated logic circuit of hardware in a processor or instructions in a software form in the processor. The above processor may be a general purpose processor, a digital signal processor (DSP), an application specific integrated circuit (ASIC), a field programmable gate array (FPGA) or other programmable logic device, a discrete gate, a transistor logic device, or a discrete hardware component, which may implement or execute the disclosed methods, steps and logic block diagrams in the embodiments of the present disclosure. The general purpose processor may be a microprocessor, or the processor may be any conventional processor. The steps of the methods disclosed in conjunction with the embodiments of the present disclosure may be directly implemented as being performd by the hardware decoding processor, or may be implemented by a combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present disclosure may be a volatile (transitory) memory or a non-volatile (non-transitory) memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not limitation, a variety of forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct memory bus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present disclosure may be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct memory bus random access memory (Direct Rambus RAM, DR RAM). That is, the memory in the embodiments of the present disclosure is intended to include, but not limited to, these and any other suitable types of memories.

The embodiments of the present disclosure further provide a computer-readable storage medium for storing a computer program.

Optionally, the computer-readable storage medium may be applied to the first access point device in the embodiments of the present disclosure, and the computer program enables a computer to perform the corresponding processes implemented by the first access point device in the various methods in the embodiments of the present disclosure, which will not be repeated here for the sake of brevity.

Optionally, the computer-readable storage medium may be applied to the first station device in the embodiments of the present disclosure, and the computer program enables the computer to perform the corresponding processes implemented by the first station device in the various methods in the embodiments of the present disclosure, which will not be repeated here for the sake of brevity.

The embodiments of the present disclosure further provide a computer program product including computer program instructions.

Optionally, the computer program product may be applied to the first access point device in the embodiments of the present disclosure, and the computer program instructions enable a computer to perform the corresponding processes implemented by the first access point device in the various methods in the embodiments of the present disclosure, which will not be repeated here for the sake of brevity.

Optionally, the computer program product may be applied to the first station device in the embodiments of the present disclosure, and the computer program instructions enable a computer to perform the corresponding processes implemented by the first station device in the various methods in the embodiments of the present disclosure, which will not be repeated here for the sake of brevity.

The embodiments of the present disclosure further provide a computer program.

Optionally, the computer program may be applied to the first access point device in the embodiments of the present disclosure. The computer program which, when executed on a computer, enables the computer to perform the corresponding processes implemented by the first access point device in the various methods in the embodiments of the present disclosure, which will not be repeated here for the sake of brevity.

Optionally, the computer program may be applied to the first station device in the embodiments of the present disclosure. The computer program which, when executed on a computer, enables the computer to perform the corresponding processes implemented by the first station device in the various methods in the embodiments of the present disclosure, which will not be repeated here for the sake of brevity.

Those of ordinary skill in the art will appreciate that units and algorithm steps of all examples described in conjunction with the embodiments disclosed herein may be implemented by electronic hardware, or by a combination of computer software and electronic hardware. Whether these functions are performed in hardware or software depends on the specific application and design constraints of the technical solutions. Those skilled in the art may use different methods to implement the described functions for each specific application, but such implementation should not be considered beyond the scope of the present disclosure.

It may be clearly understood by those skilled in the art that for convenience and brevity of the description, the specific operating processes of the system, devices and units described above may refer to the corresponding processes in the above method embodiments, which will not be repeated here.

In several embodiments provided by the present disclosure, it should be understood that the disclosed system, devices and methods may be implemented in other ways. For example, the device embodiments described above are only schematic. For example, the division of the units is only division of logical functions, and there may be other division ways in the actual implementation, for example, a plurality of units or components may be combined or integrated into another system, or some features may be ignored or not implemented. In addition, the mutual coupling or direct coupling or communication connection illustrated or discussed may be indirect coupling or communication connection via some interfaces, devices or units, and may be in electrical, mechanical or other forms.

The units described as separation components may or may not be physically separated, and the components shown as units may or may not be physical units, that is, they may be located at one place, or may be distributed onto a plurality of network units. Some or all of the units may be selected according to actual requirements to implement the purpose of the schemes of the embodiments.

In addition, various functional units in various embodiment of the present disclosure may be integrated into one processing unit, or various units may exist physically alone, or two or more units may be integrated into one unit.

If the functions are implemented in the form of a software functional unit and are sold or used as an independent product, they may be stored in a computer readable storage medium. Based on such an understanding, the technical solution of the present disclosure, in essence or the part of the technical solution that contributes to the prior art or the part of the technical solution, may be embodied in the form of a software product, and the computer software product is stored in a storage medium and includes several instructions for making a computer device (which may be a personal computer, a server, a network device, or the like) to perform all or part of the steps of the methods described in various embodiments of the present disclosure. The aforementioned storage media includes a SB flash drive (U disk), a mobile hard disk, a read-only memory (ROM), a random access memory (RAM), a disk, an optical disk, and other mediums that may store program codes.

The foregoing descriptions are merely specific implementations of the present disclosure, but the protection scope of the present disclosure is not limited thereto. Any skilled person in the art could readily conceive of changes or replacements within the technical scope of the present disclosure, which shall be all included in the protection scope of the present disclosure. Therefore, the protection scope of the present disclosure shall be subject to the protection scope of claims.

## Claims

1. A wireless communication method, comprising:
receiving, by a first access point device, first information transmitted by a first station device, wherein the first information is used for indicating information of at least one first basic service set (BSS), transmission within the at least one first BSS is capable of interfering with transmission during a restricted target wake time (R-TWT) service period (SP) established between the first station device and the first access point device, and the at least one first BSS is an overlapping basic service set (OBSS) of a BSS to which the first access point device and the first station device belong; and
establishing, by the first access point device, an R-TWT between the first access point device and the first station device according to the first information.

2. The method according to claim 1, wherein the first information comprises at least one of:
identify (ID) information of the at least one first BSS or color information of the at least one first BSS;
established R-TWT information within the at least one first BSS; or
received strength information of signal transmitted by the first station device to an access point device within the at least one first BSS.

3. The method according to claim 1 or 2, wherein the first information is carried in a first request frame, and the first request frame is used for requesting establishment of the R-TWT between the first station device and the first access point device.

4. The method according to claim 3, wherein the first request frame comprises a first target wake time (TWT) element, and the first information is carried in the first TWT element.

5. The method according to claim 4, wherein the first TWT element comprises an OBSS Info List field, and an OBSS Info field is used for indicating the at least one first BSS.

6. The method according to claim 5, wherein the OBSS Info List field comprises a basic service set identifier (BSSID) Size field and/or at least one BSSID field, the BSSID Size field is used for indicating a number of BSSID fields comprised in the OBSS Info field, and the at least one BSSID field is used for indicating ID information of the at least one first BSS.

7. The method according to claim 5, wherein the OBSS Info List field comprises a BSS Color Size field and/or at least one BSS Color field, the BSS Color Size field is used for indicating a number of BSS Color fields comprised in the OBSS Info field, and the at least one BSS Color field is used for indicating color information of the at least one first BSS.

8. The method according to claim 4, wherein the first TWT element comprises an OBSS Info List field, and an OBSS List field is used for indicating the at least one first BSS and received strength information of signal transmitted by the first station device to an access point device within the at least one first BSS.

9. The method according to claim 8, wherein the OBSS Info List field comprises an OBSS Info Size field and/or at least one OBSS Info field, the OBSS Info Size field is used for indicating a number of OBSS Info fields comprised in the OBSS Info field, and the at least one OBSS Info field is used for indicating ID information or color information of the at least one first BSS and the received strength information of signal transmitted by the first station device to the access point device within the at least one first BSS.

10. The method according to any one of claims 3 to 9, wherein the first request frame further comprises an OBSS Info List Present field for indicating whether the first request frame comprises an OBSS Info List field.

11. The method according to claim 10, wherein the first request frame comprises a Broadcast TWT Info field, and the Broadcast TWT Info field comprises the OBSS Info List Present field.

12. The method according to any one of claims 3 to 11, wherein the first request frame further comprises at least one OBSS R-TWT element for carrying established R-TWT information within the at least one first BSS, and each OBSS R-TWT element is used for carrying established R-TWT information within one first BSS.

13. The method according to any one of claims 3 to 12, wherein the first request frame further comprises R-TWT information requested by the first station device, and there is no overlap in time between an R-TWT requested by the first station device and an R-TWT within the at least one first BSS.

14. The method according to any one of claims 1 to 13, further comprising:
obtaining, by the first access point device, established R-TWT information within the at least one first BSS according to the first information.

15. The method according to claim 14, wherein the established R-TWT information within the at least one first BSS is obtained by the first access point device from an access point device within the at least one first BSS.

16. The method according to claim 15, wherein the established R-TWT information within the at least one first BSS is obtained by the first access point device from a beacon frame transmitted by the access point device within the at least one first BSS.

17. The method according to claim 16, wherein the at least one first BSS comprises a BSS to which a second access point device belongs, and a beacon frame transmitted by the second access point device comprises R-TWT information established between the second access point device and a station device associated with the second access point device.

18. The method according to claim 17, wherein the beacon frame comprises a second TWT element, and the second TWT element is used for carrying the R-TWT information established between the second access point device and the station device associated with the second access point device.

19. The method according to claim 18, wherein the second TWT element is further used for carrying information of at least one second BSS, transmission within the at least one second BSS is capable of interfering with transmission during a R-TWT SP established between the second access point device and the station device associated with the second access point device, and the at least one second BSS is an OBSS of the BSS to which the second access point device belongs.

20. The method according to claim 14, wherein the established R-TWT information within the at least one first BSS is obtained by the first access point device from a station device associated with the first access point device.

21. The method according to claim 20, further comprising:
transmitting, by the first access point device, a second request frame to the station device associated with the first access point device, wherein the second request frame is used for requesting the station device to report R-TWT information within an OBSS of a BSS to which the station device belongs, in which the R-TWT information is obtained by the station device;
receiving, by the first access point device, a second response frame transmitted by the station device associated with the first access point device, wherein the second response frame is used for reporting the R-TWT information within the OBSS of the BSS to which the station device belongs, in which the R-TWT information is obtained by the station device.

22. The method according to claim 21, wherein the second request frame is a beacon request frame, and the second response frame is a beacon response frame.

23. The method according to claim 21 or 22, wherein the OBSS of the BSS to which the station device belongs comprises a BSS to which a third access point device belongs, the second response frame comprises a third TWT element, and the third TWT element is used for carrying R-TWT information established between the third access point device and a station device associated with the third access point device.

24. The method according to claim 23, wherein the third TWT element is further used for carrying information of at least one third BSS, and transmission within the at least one third BSS is capable of interfering with transmission during a R-TWT SP established between the third access point device and the station device associated with the third access point device.

25. The method according to claim 14, wherein an access point device within the at least one first BSS and the first access point device belong to a same group, and the access point devices within the same group share established R-TWT information within BSSs to which the access point devices belong.

26. The method according to any one of claims 3 to 25, further comprising:
transmitting, by the first access point device, a first response frame to the first station device, wherein the first response frame is a response frame of the first request frame, the first response frame comprises target R-TWT information, and there is no overlap in time between an R-TWT determined according to the target R-TWT information and an R-TWT within the at least one first BSS.

27. The method according to any one of claims 1 to 26, further comprising:
maintaining, by the first access point device, silence during an R-TWT SP indicated by established R-TWT information within a first BSS set, wherein BSSs within the first BSS set and the BSS to which the first access point device belongs are OBSSs.

28. The method according to claim 27, wherein the first BSS set is a set of BSSs to which access point devices from which the first access point device receives beacon frames belong, and the beacon frame comprises established R-TWT information within the BSSs.

29. The method according to any one of claims 1 to 28, further comprising:
maintaining, by the first access point device, silence during an R-TWT SP indicated by first R-TWT information, wherein the first R-TWT information is established R-TWT information within a fourth BSS, and an OBSS of the fourth BSS comprises the BSS to which the first access point device belongs.

30. The method according to any one of claims 1 to 29, wherein responsive to that OBSS information reported by a second station device to the first access point device is the same as that reported by the first station device to the first access point device, R-TWT information established between the first access point device and the first station device is the same as R-TWT information established between the first access point device and the second station device.

31. A wireless communication method, comprising:
transmitting, by a first station device, first information to a first access point device, wherein the first information is used for indicating information of at least one first basic service set (BSS), transmission within the at least one first BSS is capable of interfering with transmission during a restricted target wake time (R-TWT) service period (SP) established between the first station device and the first access point device, and the at least one first BSS is an overlapping basic service set (OBSS) of a BSS to which the first access point device and the first station device belong.

32. The method according to claim 31, wherein the first information comprises at least one of:
identify (ID) information of the at least one first BSS or color information of the at least one first BSS;
established R-TWT information within the at least one first BSS; or
received strength information of signal transmitted by the first station device to an access point device within the at least one first BSS.

33. The method according to claim 31 or 32, wherein the first information is carried in a first request frame, and the first request frame is used for requesting establishment of an R-TWT between the first station device and the first access point device.

34. The method according to claim 33, wherein the first request frame comprises a first target wake time (TWT) element, and the first information is carried in the first TWT element.

35. The method according to claim 34, wherein the first TWT element comprises an OBSS Info List field, and an OBSS Info field is used for indicating the at least one first BSS.

36. The method according to claim 35, wherein the OBSS Info List field comprises a basic service set identifier (BSSID) Size field and/or at least one BSSID field, the BSSID Size field is used for indicating a number of BSSID fields comprised in the OBSS Info field, and the at least one BSSID field is used for indicating ID information of the at least one first BSS.

37. The method according to claim 35, wherein the OBSS Info List field comprises a BSS Color Size field and/or at least one BSS Color field, the BSS Color Size field is used for indicating a number of BSS Color fields comprised in the OBSS Info field, and the at least one BSS Color field is used for indicating color information of the at least one first BSS.

38. The method according to claim 34, wherein the first TWT element comprises an OBSS Info List field, and an OBSS List field is used for indicating the at least one first BSS and received strength information of signal transmitted by the first station device to an access point device within the at least one first BSS.

39. The method according to claim 38, wherein the OBSS Info List field comprises an OBSS Info Size field and/or at least one OBSS Info field, the OBSS Info Size field is used for indicating a number of OBSS Info fields comprised in the OBSS info field, and the at least one OBSS Info field is used for indicating ID information or color information of the at least one first BSS and the received strength information of signal transmitted by the first station device to the access point device within the at least one first BSS.

40. The method according to any one of claims 33 to 39, wherein the first request frame further comprises an OBSS Info List Present field for indicating whether the first request frame comprises an OBSS Info List field.

41. The method according to claim 40, wherein the first request frame comprises a Broadcast TWT Info field, and the Broadcast TWT Info field comprises the OBSS Info List Present field.

42. The method according to any one of claims 33 to 41, wherein the first request frame further comprises at least one OBSS R-TWT element for carrying established R-TWT information within the at least one first BSS, and each OBSS R-TWT element is used for carrying established R-TWT information within one first BSS.

43. The method according to any one of claims 32 to 42, wherein the first request frame further comprises R-TWT information requested by the first station device, and there is no overlap in time between an R-TWT requested by the first station device and an R-TWT within the at least one first BSS.

44. The method according to any one of claims 31 to 43, further comprising:
transmitting, by the first station device, second information to the first access point device, wherein the second information comprises established R-TWT information within the at least one first BSS.

45. The method according to claim 44, wherein the established R-TWT information within the at least one first BSS is obtained by the first station device from an access point device within the at least one first BSS.

46. The method according to claim 45, wherein the established R-TWT information within the at least one first BSS is obtained by the first station device from a beacon frame transmitted by the access point device within the at least one first BSS.

47. The method according to claim 46, wherein the at least one first BSS comprises a BSS to which a third access point device belongs, and a beacon frame transmitted by the third access point device comprises R-TWT information established between the third access point device and a station device associated with the third access point device.

48. The method according to claim 47, wherein the beacon frame comprises a third TWT element, and the third TWT element is used for carrying the R-TWT information established between the third access point device and the station device associated with the third access point device.

49. The method according to claim 48, wherein the third TWT element is further used for carrying information of at least one third BSS, and transmission within the at least one third BSS is capable of interfering with transmission during a R-TWT SP established between the third access point device and the station device associated with the third access point device.

50. The method according to any one of claims 44 to 49, wherein the second information is transmitted through a beacon response frame.

51. The method according to any one of claims 33 to 50, further comprising:
receiving, by the first station device, a first response frame transmitted by the first access point device, wherein the first response frame is a response frame of the first request frame, and the first response frame comprises target R-TWT information, and there is no overlap in time between an R-TWT determined according to the target R-TWT information and an R-TWT within the at least one first BSS.

52. The method according to any one of claims 31 to 51, further comprising:
maintaining, by the first station device, silence during all R-TWT SPs indicated by established R-TWT information within a second BSS set other than the R-TWT SP established between the first station device and the first access point device, wherein the second BSS set is a set of BSSs to which access point devices from which the first station device receives beacon frames belongs.

53. An access point device, comprising:
a communication unit, configured to receive first information transmitted by a first station device, wherein the first information is used for indicating information of at least one first basic service set (BSS), transmission within the at least one first BSS is capable of interfering with transmission during a restricted target wake time (R-TWT) service period (SP) established between the first station device and the access point device, and the at least one first BSS is an overlapping basic service set (OBSS) of a BSS to which the access point device and the first station device belong; and
a processing unit, configured to establish an R-TWT between the access point device and the first station device according to the first information.

54. A station device, comprising:
a communication unit, configured to transmit first information to a first access point device, wherein the first information is used for indicating information of at least one first basic service set (BSS), transmission within the at least one first BSS is capable of interfering with transmission during a restricted target wake time (R-TWT) service period (SP) established between the first station device and the first access point device, and the at least one first BSS is an overlapping basic service set (OBSS) of a BSS to which the first access point device and the first station device belong.

55. An access point device, comprising: a processor and a memory, wherein the memory is configured to store a computer program, and the processor is configured to call the computer program stored in the memory and run the computer program, to perform the method according to any one of claims 1 to 30.

56. A station device, comprising: a processor and a memory, wherein the memory is configured to store a computer program, and the processor is configured to call the computer program stored in the memory and run the computer program, to perform the method according to any one of claims 31 to 52.

57. A chip, comprising: a processor, configured to call a computer program from a memory and run the computer program, to enable a device equipped with the chip to perform the method according to any one of claims 1 to 30, or the method according to any one of claims 31 to 52.

58. A computer-readable storage medium, configured to store a computer program, wherein the computer program enables a computer to perform the method according to any one of claims 1 to 30, or the method according to any one of claims 31 to 52.

59. A computer program product, comprising computer program instructions, wherein the computer program instructions enable a computer to perform the method according to any one of claims 1 to 30, or the method according to any one of claims 31 to 52.

60. A computer program, wherein the computer program enables a computer to perform the method according to any one of claims 1 to 30, or the method according to any one of claims 31 to 52.
